# EUROPEAN PATENT APPLICATION

(11) **EP 4 566 881 A2**
(43) Date of publication of application: **11.06.2025**
(21) Application number: 25171733.6
(22) Date of filing: 03.03.2023
(51) Int. Cl.: B60N 2/90

(54) **VEHICLE SEAT**

(30) Priority: 14.03.2022 US 202263319436 P; 28.02.2023 JP 2023030093; 28.02.2023 JP 2023030094; 28.02.2023 JP 2023030095
(62) Divisional of application: 23770477.0
(71) Applicant: TS Tech Co., Ltd., Asaka-shi, Saitama 351-0012 (JP); Suzuki Motor Corporation, Shizuoka 432-8611 (JP)
(72) Inventor: Aoki, Takahide, Shioya-gun, Tochigi, 329-1217 (JP); Wada, Hirotaka, Hamamatsu-shi, 432-8611 (JP); Mineshima, Yudai, Hamamatsu-shi, 432-8611 (JP); Sano, Yuma, Hamamatsu-shi, 432-8611 (JP)
(74) Representative: Grünecker Patent- und Rechtsanwälte PartG mbB

(57) **Abstract**

There is provided a conveyance seat that allows a functional component to be disposed at a desired position while suppressing an increase in thickness in a seat front to rear direction. A conveyance seat (S) includes a seat back frame (10) including a pair of side frames (11 and 11), and a connection frame (12) having a plate shape and disposed between the pair of side frames (11 and 11); and a functional component (30) that is mounted on a surface (12a) on a seated occupant side of the connection frame (12). A first clearance portion (15) into which the functional component (30) sinks in a direction separated from a seated occupant is formed on the surface (12a) on the seated occupant side of the connection frame (12).

## Description

### TECHNICAL FIELD

The present invention relates to a conveyance seat, particularly to a conveyance seat including a seat frame.

### BACKGROUND ART

A vehicle seat includes a seat cushion, a seat back, and a headrest, and each of the seat back and the seat cushion is provided with a seat frame forming a skeleton.

In addition, in recent years, a vehicle seat including a functional component such as a blower that sends out air to a seated occupant has been developed, and in a conveyance seat disclosed in PATENT LITERATURE 1, a blower is provided on a back frame of a seat back.

### CITATION LIST

### PATENT LITERATURE

PATENT LITERATURE 1: JP 2019-6392 A

### SUMMARY OF INVENTION

### TECHNICAL PROBLEM

However, in the conventional vehicle seat, in order to suppress an increase in thickness in a seat front to rear direction, the functional component is disposed at a position where the functional component does not overlap an upper frame in an up to down direction, and it is difficult to dispose the functional component at the originally desired position, which is a problem.

The present invention has been made in view of the above-described problem, and an object of the present invention is to provide a conveyance seat that allows a functional component to be disposed at a desired position while suppressing an increase in thickness in a seat front to rear direction.

### SOLUTION TO PROBLEM

The above-described problem is solved by a conveyance seat of the present invention including: a seat back frame including a pair of side frames, and a connection frame having a plate shape and disposed between the pair of side frames; and a first functional component that is mounted on a surface on a seated occupant side of the connection frame. A first clearance portion into which the first functional component sinks in a direction separated from a seated occupant is formed on the surface on the seated occupant side of the connection frame.

In the seat back frame, by forming the first clearance portion in the connection frame (for example, an upper frame) connecting the pair of side frames, the first functional component sinking into the first clearance portion in the direction separated from the seated occupant, the first functional component can be compactly disposed without protruding toward the seated occupant side, and it is possible to provide the conveyance seat that allows the first functional component to be disposed at a desired position while suppressing an increase in thickness in a seat front to rear direction.

In addition, in the above-described configuration, the first clearance portion may be a recess formed on the surface on the seated occupant side of the connection frame, and the first functional component may be disposed in the recess.

By disposing the first functional component in the recess formed in the connection frame, the first functional component can be more easily disposed at the desired position while suppressing an increase in thickness in the seat front to rear direction.

In addition, in the above-described configuration, the seat back frame may include a first mounting member that mounts the first functional component on the connection frame, and a mounting member fixing portion formed to protrude from the first clearance portion toward the seated occupant side may be formed in the connection frame.

By forming the mounting member fixing portion protruding toward the seated occupant side, mounting workability of the first functional component can be improved.

In addition, in the above-described configuration, the first mounting member may include a connector support portion at a lower end portion of the first mounting member, the connector support portion supporting a connector that connects to the first functional component.

By providing the connector support portion at a lower end of the first mounting member, mounting workability of the connector of the first functional component can be improved.

In addition, in the above-described configuration, the connector support portions may be provided on both right and left sides of the lower end portion of the first mounting member.

By providing the connector support portions on both the right and left sides of the first mounting member, the connector can be mounted even when the conveyance seat is disposed on either side of a vehicle, and the first mounting member can be shared.

In addition, in the above-described configuration, the connector support portion may be disposed below a lower end of the connection frame.

By disposing the connector support portion below the lower end of the connection frame, for example, interference between the connection frame and the connector is suppressed.

In addition, in the above-described configuration, the seat back frame may include a pair of headrest holders that are mounted on the connection frame, and that support a headrest, and the first mounting member may be disposed between the pair of headrest holders.

By disposing the first mounting member between the pair of headrest holders, the protrusion of the first mounting member toward the seated occupant side can be suppressed, and the conveyance seat can be made more compact.

In addition, in the above-described configuration, the first mounting member may be fixed to the connection frame at three points located on a first connection portion disposed at an upper end portion of the first mounting member and two second connection portions disposed at a lower end portion of the first mounting member.

By fixing the first mounting member to the connection frame at three points, the first mounting member can be firmly fixed in a simple manner.

In addition, in the above-described configuration, the first mounting member may include positioning portions on both right and left sides of the first connection portion, the positioning portions positioning a position of the first mounting member with respect to the connection frame.

By providing the positioning portions on both the right and left sides of the first connection portion, the positioning of the first mounting member is made easy.

In addition, in the above-described configuration, grommets may be provided on the first connection portion and the second connection portions of the first mounting member.

By providing the grommets, the fixing strength of the first connection portion and the second connection portions can be improved, and assembly can be made easy.

In addition, in the above-described configuration, the seat back frame may include a pair of headrest holders that are mounted on the connection frame, and that support a headrest, and the first connection portion may be disposed between the pair of headrest holders, and the second connection portions may not be disposed between the pair of headrest holders.

By disposing the first connection portion between the pair of headrest pillars, the fixing strength can be improved, and by not disposing the second connection portions between the pair of headrest pillars, assembly can be made easy.

In addition, in the above-described configuration, the first mounting member may include a plurality of functional component fixing portions that fix the first functional component to the first mounting member. The first connection portion may be disposed between two functional component fixing portions adjacent to each other among the plurality of functional component fixing portions. The second connection portions may be disposed in the vicinities of two functional component fixing portions disposed on a lower side of the first mounting member among the plurality of functional component fixing portions.

By disposing the first connection portion between the two functional component fixing portions, and disposing the second connection portions in the vicinities of the functional component fixing portions, the fixing strength can be improved.

In addition, in the above-described configuration, a seat frame including the seat back frame and a seat cushion frame, and a rail device composed of a lower rail that is fixed to a floor and an upper rail that is mounted on the seat frame and that slidably engages with the lower rail may be provided. The lower rail may be fixed to the floor by a fastening member. A second clearance portion into which the fastening member sinks from a bottom portion of the lower rail may be formed immediately below the lower rail in the lower rail.

By forming the second clearance portion at the bottom portion of the lower rail, the fastening member sinking into the second clearance portion, a head portion of the fastening member is lowered, and interference with the upper rail is suppressed. For that reason, it is possible to provide the conveyance seat including the rail device that can be mounted on the floor without limiting the movement of the upper rail.

In addition, in the above-described configuration, a seat frame including the seat back frame and a seat cushion frame, a second functional component, and a second mounting member that is fixed to the second functional component and that mounts the second functional component on the seat frame may be provided. The second mounting member may include a plurality of temporary fastening portions that temporarily fasten the second mounting member to the seat frame. The plurality of temporary fastening portions may be disposed at positions where the second functional component is interposed between the plurality of temporary fastening portions.

By providing the plurality of temporary fastening portions that temporarily fasten the second mounting member to the seat frame, and disposing the plurality of temporary fastening portions so as to interpose the second functional component therebetween, for example, the accuracy of temporary fastening or holding force centered on the second functional component is increased, so that it is possible to provide the conveyance seat with improved ease of assembly.

### ADVANTAGEOUS EFFECTS OF INVENTION

According to the conveyance seat of the present invention, in the seat back frame, by forming the first clearance portion in the connection frame (for example, the upper frame) connecting the pair of side frames, the first functional component sinking into the first clearance portion in the direction separated from the seated occupant, the first functional component can be compactly disposed without protruding toward the seated occupant side, and it is possible to provide the conveyance seat that allows the first functional component to be disposed at a desired position while suppressing an increase in thickness in the seat front to rear direction.

In addition, by disposing the first functional component in the recess formed in the connection frame, the first functional component can be more easily disposed at the desired position while suppressing an increase in thickness in the seat front to rear direction.

In addition, by forming the mounting member fixing portion protruding toward the seated occupant side, mounting workability of the first functional component can be improved.

In addition, by providing the connector support portion at the lower end of the first mounting member, mounting workability of the connector of the first functional component can be improved.

In addition, by providing the connector support portions on both the right and left sides of the first mounting member, the connector can be mounted even when the conveyance seat is disposed on either side of the vehicle, and the first mounting member can be shared.

In addition, by disposing the connector support portion below the lower end of the connection frame, for example, interference between the connection frame and the connector is suppressed.

In addition, by disposing the first mounting member between the pair of headrest holders, the protrusion of the first mounting member toward the seated occupant side can be suppressed, and the conveyance seat can be made more compact.

In addition, by fixing the first mounting member to the connection frame at three points, the first mounting member can be firmly fixed in a simple manner.

In addition, by providing the positioning portions on both the right and left sides of the first connection portion, the positioning of the first mounting member is made easy.

In addition, by providing the grommets, the fixing strength of the first connection portion and the second connection portions can be improved, and assembly can be made easy.

In addition, by disposing the first connection portion between the pair of headrest pillars, the fixing strength can be improved, and by not disposing the second connection portions between the pair of headrest pillars, assembly can be made easy.

In addition, by disposing the first connection portion between the two functional component fixing portions, and disposing the second connection portions in the vicinities of the functional component fixing portions, the fixing strength can be improved.

In addition, by forming the second clearance portion at the bottom portion of the lower rail, the fastening member sinking into the second clearance portion, the head portion of the fastening member is lowered, and interference with the upper rail is suppressed. For that reason, it is possible to provide the conveyance seat including the rail device that can be mounted on the floor without limiting the movement of the upper rail.

In addition, by providing the plurality of temporary fastening portions that temporarily fasten the second mounting member to the seat frame, and disposing the plurality of temporary fastening portions so as to interpose the second functional component therebetween, for example, the accuracy of temporary fastening or holding force centered on the second functional component is increased, so that it is possible to provide the conveyance seat with improved ease of assembly.

### BRIEF DESCRIPTION OF DRAWINGS

FIG. 1 is a perspective view showing an appearance of a conveyance seat according to the present embodiment when viewed obliquely from the front.
FIG. 2 is a perspective view of a seat frame when viewed obliquely from the front.
FIG. 3 is a front view of the seat frame.
FIG. 4 is a rear view of the seat frame.
FIG. 5 is a top view of the seat frame.
FIG. 6 is a bottom view of the seat frame.
FIG. 7 is a cross-sectional view taken along line VII-VII of FIG. 3.
FIG. 8 is a cross-sectional view taken along line VIII-VIII of FIG. 3.
FIG. 9 is a front view showing an upper frame to which a first mounting bracket is fixed.
FIG. 10 is an exploded perspective view of the first mounting bracket.
FIG. 11 is a perspective view of a rail device when viewed obliquely from the front.
FIG. 12 is a perspective view of the rail device when viewed from the inside of the conveyance seat.
FIG. 13 is a top view showing a tip portion of a lower rail.
FIG. 14 is a perspective view showing the tip portion of the lower rail.
FIG. 15 is a cross-sectional view along line XV-XV of FIG. 13.
FIG. 16 is an exploded perspective view of the tip portion of the lower rail.
FIG. 17 is an explanatory view showing engagement between a tip of the lower rail and a cover member.
FIG. 18 is a perspective view showing a pan frame on which a second blower is mounted.
FIG. 19 is a partial enlarged perspective view showing a portion A of FIG. 18 in an enlarged manner.
FIG. 20 is a bottom view of the pan frame to which a second mounting bracket is mounted, and is a view showing a state where the second blower is removed.
FIG. 21 is a perspective view showing an upper surface side of the second mounting bracket.
FIG. 22 is a perspective view showing a lower surface side of the second mounting bracket.

### DESCRIPTION OF EMBODIMENTS

Hereinafter, a configuration of a conveyance seat according to one embodiment of the present invention will be described with reference to the drawings. However, the embodiment to be described below is provided for easy understanding of the present invention, and does not limit the present invention. Namely, the present invention can be modified or improved without departing from the concept of the present invention, and it goes without saying that the present invention includes equivalents thereof.

In addition, in the following description, the content regarding the material, shape, and size of seat components is merely one specific example, and does not limit the present invention.

Incidentally, hereinafter, a vehicle seat that is installed in a vehicle (hereinafter, conveyance seat S) will be provided as one example of a conveyance seat, and a configuration example thereof will be described.

In addition, in the following description, the "front to rear direction" is a front to rear direction of the conveyance seat S, is a direction coinciding with a traveling direction when the vehicle travels, and may be referred as a "seat front to rear direction". In addition, the "seat width direction" is a lateral width direction of the conveyance seat S, and is a direction coinciding with a right to left direction when viewed from an occupant seated in the conveyance seat S. In addition, the "up to down direction" is an up to down direction of the conveyance seat, and is a direction coinciding with a vertical direction when the vehicle travels on a horizontal surface. In addition, the "outside" being simply referred to indicates a side closer to the outside in a direction from the center of the conveyance seat S alone toward the outside, and the "inside" being referred to means a side closer to the center in a direction from the outside of the conveyance seat S alone toward the center.

Incidentally, in the following description, unless otherwise specified, the shape, the position, the posture, and the like of each portion of the conveyance seat S will be described based on the assumption that the conveyance seat S is in a seated state to be described later.

### <Conveyance seat S>

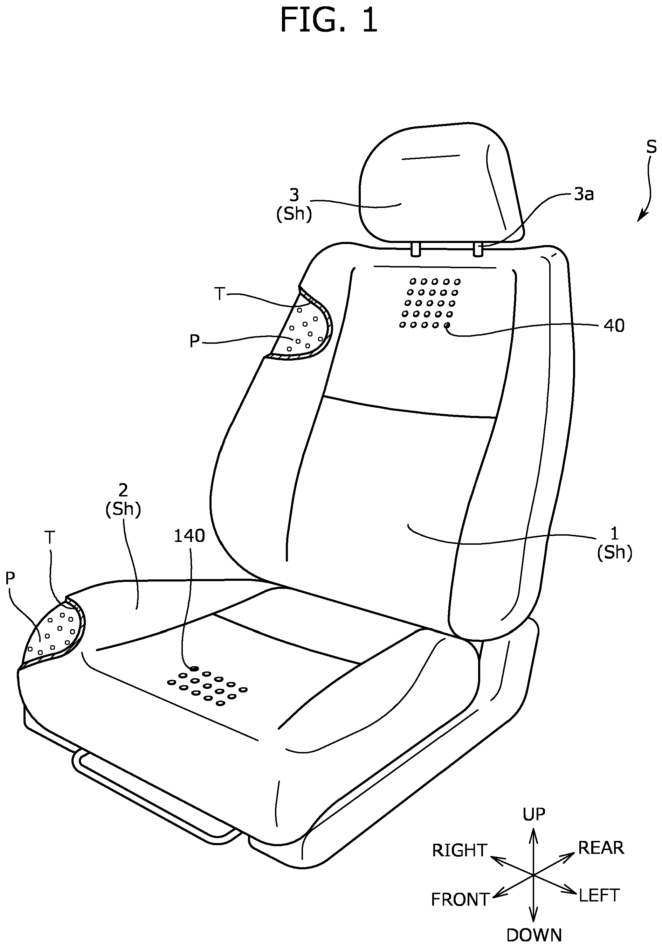

A basic configuration of the conveyance seat S according to the present embodiment will be described with reference to FIG. 1. FIG. 1 is a perspective view of the conveyance seat S, and for convenience of illustration, a part of the conveyance seat S in FIG. 1 is illustrated with a skin material T or a pad member P removed.

The conveyance seat S is a seat which is placed on a floor of the vehicle, and in which an occupant of the vehicle (hereinafter, may be referred to as a seated occupant) is seated. In the present embodiment, the conveyance seat S is used as a front seat corresponding to a front seat of the vehicle. However, the conveyance seat S is not limited thereto, and can also be used as a rear seat, and can also be used as a middle seat in a second row or a rear seat in a third row in a vehicle including three rows of seats in the front to rear direction.

As shown in FIG. 1, the conveyance seat S includes, as main components, a seat back 1 serving as a backrest portion that supports the back of the seated occupant; a seat cushion 2 serving as a seating portion that supports the buttocks of the seated occupant; and a headrest 3 that is disposed on an upper portion of the seat back 1 and that supports the head portion of the seated occupant. Incidentally, the seat back 1, the seat cushion 2, and the headrest 3 may be collectively referred to as a seat body Sh.

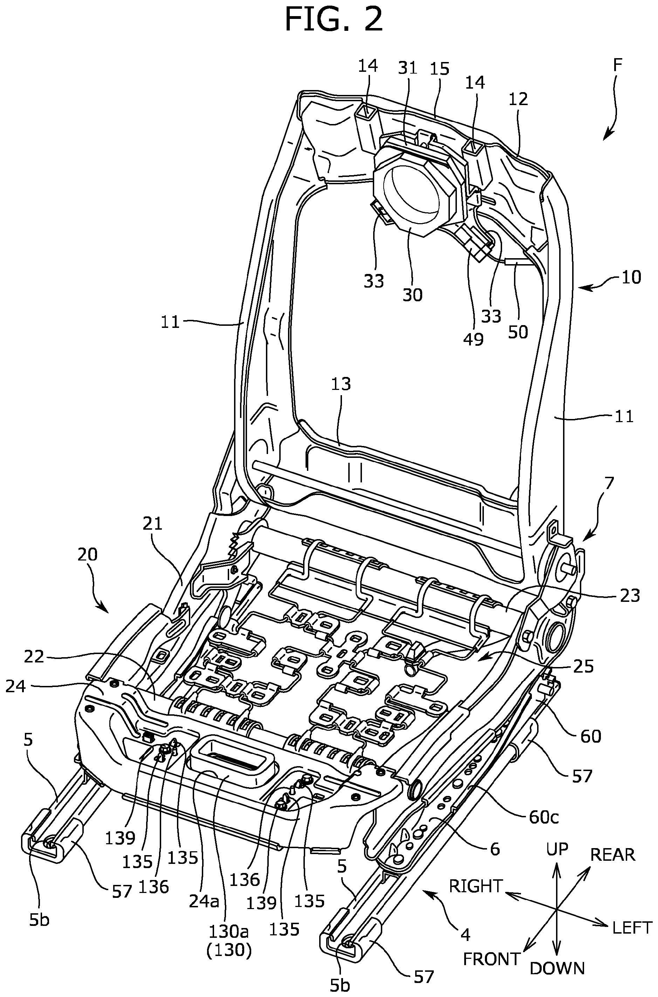

The seat back 1 and the seat cushion 2 are connected to pinch a reclining mechanism 7 (refer to FIG. 2) therebetween. The reclining mechanism 7 allows the seat back 1 to rotate with respect to the seat cushion 2, and the inclination angle of the seat back 1 can be adjusted.

Headrest stays 3a extend downward from the headrest 3, and is connected to an upper end portion of the seat back 1.

In addition, a first blower 30 (first functional component) and a second blower 130 (second functional component) that send air to the seated occupant are provided inside the conveyance seat S (refer to FIG. 2), a first blowing port 40 that sends out air sent from the first blower is formed on a seating surface of the seat back 1, and a second blowing port 140 that sends out air sent from the second blower 130 is formed on a seating surface of the seat cushion 2.

### <Seat frame F>

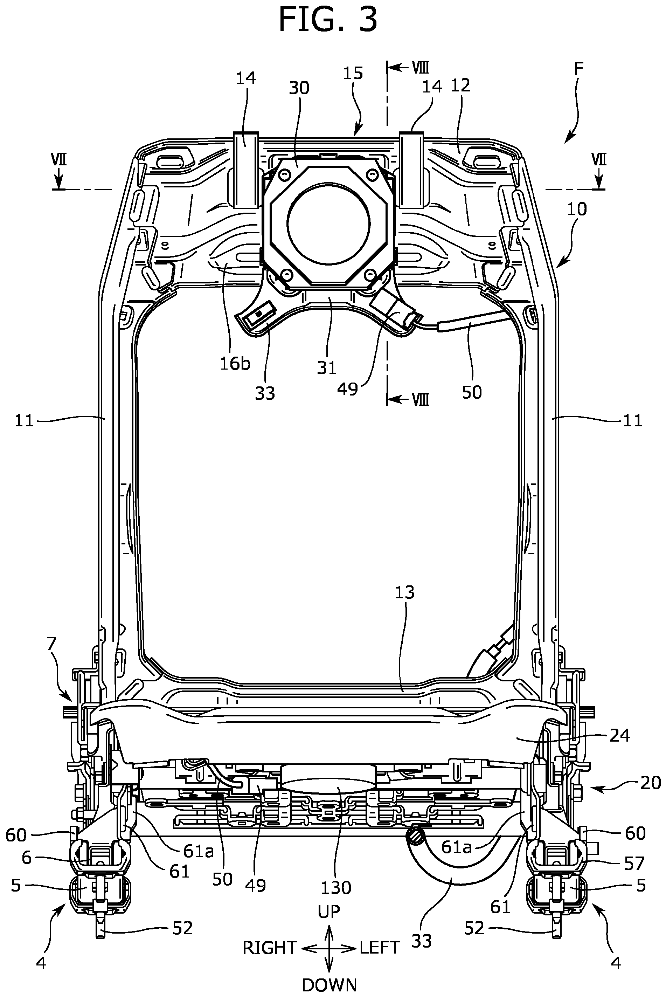

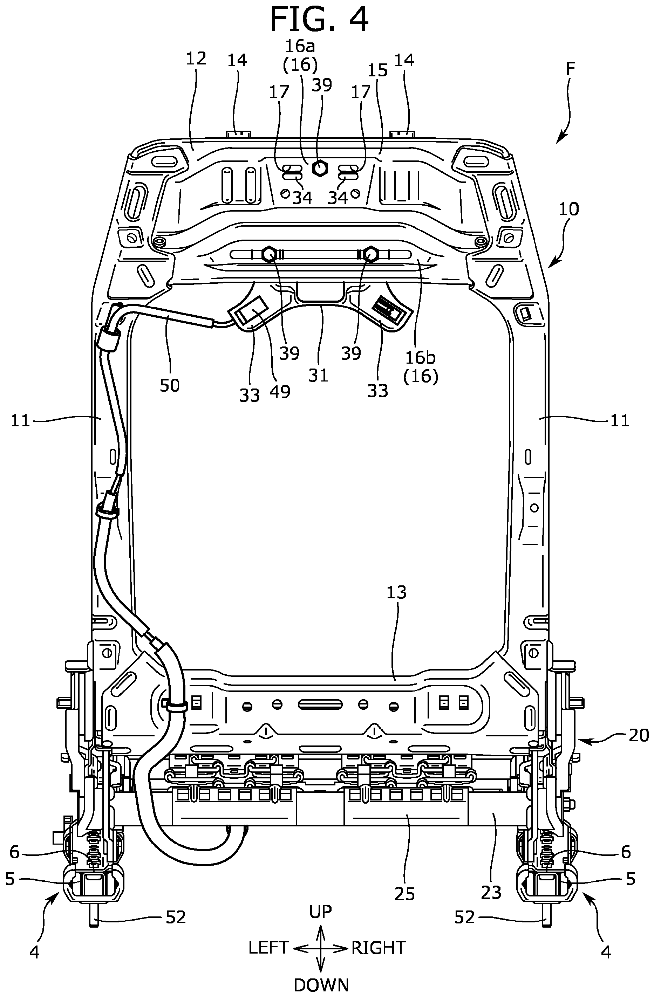

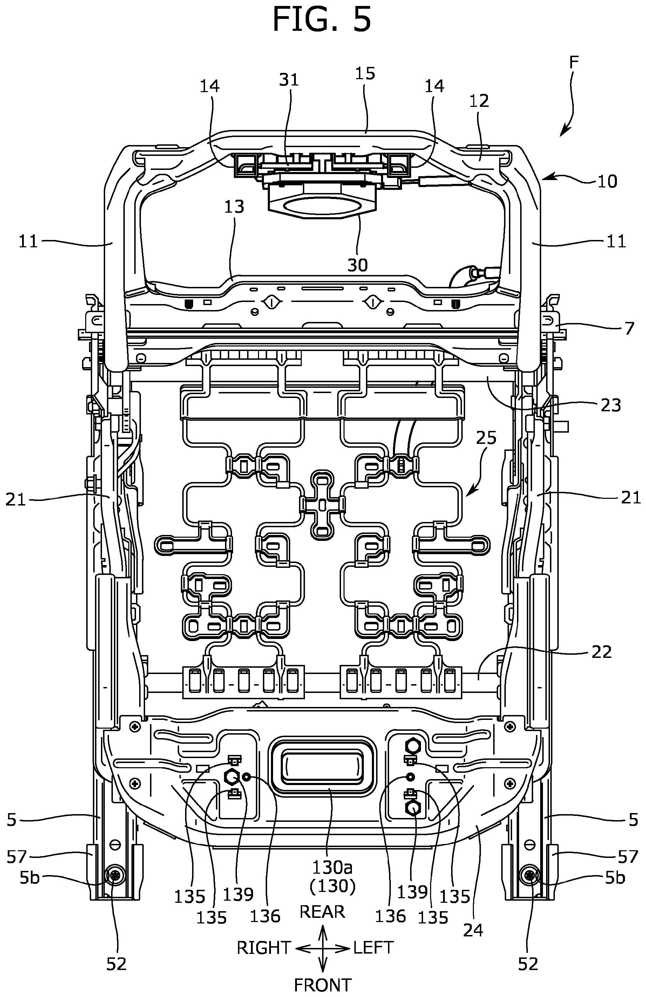

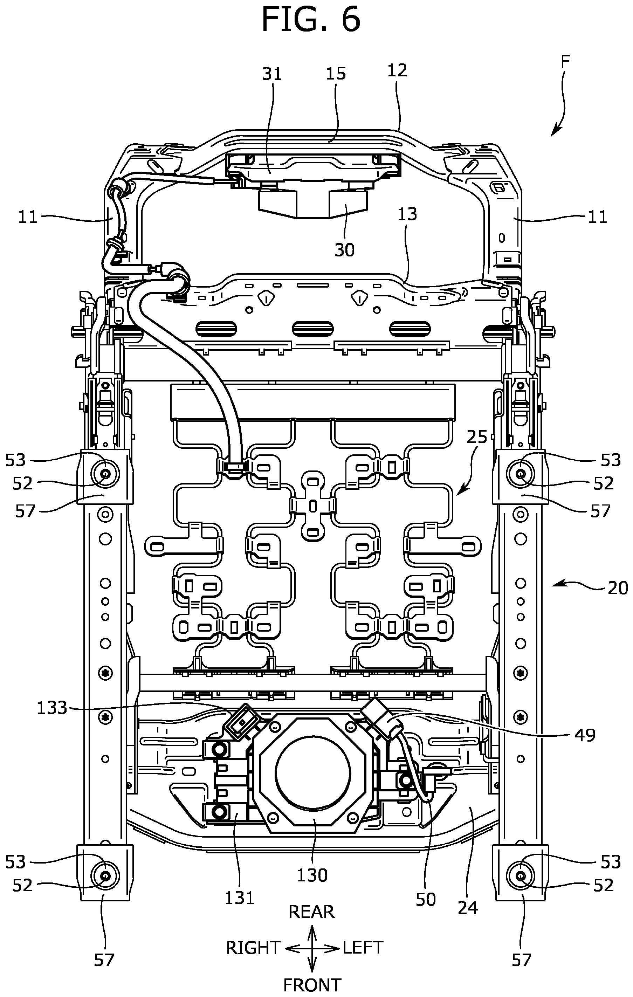

A basic configuration of a seat frame F forming the skeleton of the conveyance seat S will be described using FIGS. 2 to 6. FIG. 2 is a perspective view of the seat frame F when viewed obliquely from the front, FIG. 3 is a front view of the seat frame F, FIG. 4 is a rear view of the seat frame F, FIG. 5 is a top view of the seat frame F, and FIG. 6 is a bottom view of the seat frame F.

As shown in FIGS. 2 to 6, the seat frame F is provided inside the conveyance seat S, and the seat frame F is composed of a seat back frame 10 forming the skeleton of the seat back 1, and a seat cushion frame 20 forming the skeleton of the seat cushion 2.

### <Seat back frame 10>

As shown in FIG. 2, the seat back frame 10 is formed in a rectangular frame shape as a whole, and the seat back frame 10 includes a pair of back side frames 11 and 11 disposed on the right and left sides; an upper frame 12; and a lower frame 13. The upper frame 12 and the lower frame 13 correspond to connection frames of the present invention. The upper frame 12 is formed in a plate shape, is disposed between the pair of back side frames 11 and 11, and connects upper ends of the pair of back side frames 11 and 11. The lower frame 13 is disposed between the pair of back side frames 11 and 11, and connects lower ends of the pair of back side frames 11. In addition, a connecting frame (not illustrated) connecting the pair of back side frames 11 and 11 may be provided between the upper frame 12 and the lower frame 13.

The upper frame 12 is provided with a pair of headrest holders 14 through which the headrest stays 3a of the headrest 3 are inserted. The headrest holders 14 are members made of a high-strength metal to maintain the holding strength of the headrest 3 and suppress rattling of the headrest **3.** Incidentally, the headrest holders 14 are not limited to being made of metal, and may be made of resin.

In addition, the first blower 30 is mounted on the upper frame 12 via a first mounting bracket 31. A configuration for mounting the first blower 30 on the upper frame 12 and the first mounting bracket 31 will be described in detail after other configurations are described.

The pair of back side frames 11 and 11 are members that are disposed on the right and left sides of the seat back frame 10 as described above, and that is basically configured to be bilaterally symmetric. The pair of back side frames 11 and 11 are provided to extend in the seat up to down direction. The width of each of the pair of back side frames 11 and 11 in the seat front to rear direction is formed to increase as each of the back side frames 11 and 11 extends from a seat upper side toward a seat lower side. A peripheral edge portion on a seat front side and a peripheral edge portion on a seat rear side are formed in a curved shape to protrude toward the seat front side.

### <Seat cushion frame 20>

As shown in FIG. 3, the seat cushion frame 20 is formed in a rectangular frame shape when viewed from above, and is provided with a pair of cushion side frames 21 and 21 (a pair of side frames) on the right and left sides. The pair of cushion side frames 21 and 21 are members that are basically configured to be bilaterally symmetric, and are provided to extend in the seat front to rear direction.

In addition, the seat cushion frame 20 includes a front connection frame 22 connecting the pair of cushion side frames 21 and 21 on the front side, and a rear connection frame 23 connecting the pair of cushion side frames 21 and 21 on the rear side. The front connection frame 22 and the rear connection frame 23 are made of a round pipe. In addition, a pan frame 24 having a plate shape is further provided in front of the front connection frame 22. The second blower 130 is mounted on the pan frame 24 via a second mounting bracket 131. The second blower 130 and the second mounting bracket 131 will be described in detail after other configurations are described.

As shown in FIGS. 2 and 5, the seat cushion frame 20 is provided with a pressure receiving member 25 disposed to bridge between the front connection frame 22 and the rear connection frame 23, and the buttocks of the seated occupant can be supported by the pressure receiving member 25.

### <Rail device 4>

In addition, as shown in FIG. 2, a rail device 4 is installed below the conveyance seat S. The conveyance seat S is mounted on a vehicle body floor FL in a state where the seat body Sh is slidingly movable in the front to rear direction by the rail device 4.

The rail device 4 is composed of a lower rail 5 that is fixed onto the vehicle body floor FL, and an upper rail 6 that is slidingly movable with respect to the lower rail 5. A configuration for fixing the lower rail 5 to the vehicle body floor FL will be described later.

### <Pad member P and skin material T>

The seat back 1 and the seat cushion 2 are configured by providing the pad member P and the skin material T (cushion cover) on the outer sides of the seat back frame 10 and the seat cushion frame 20. The pad member P is, for example, a urethane base material molded by foam molding using a urethane foam material, and the skin material T is made of, for example, cloth, synthetic leather, genuine leather, or the like.

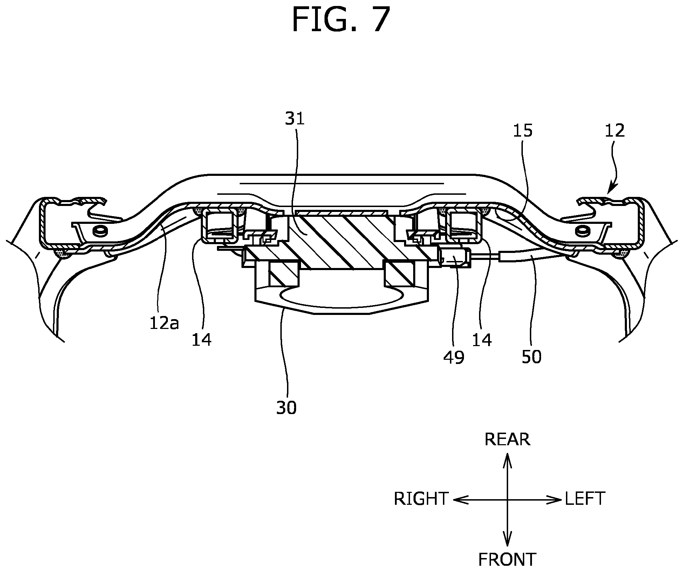

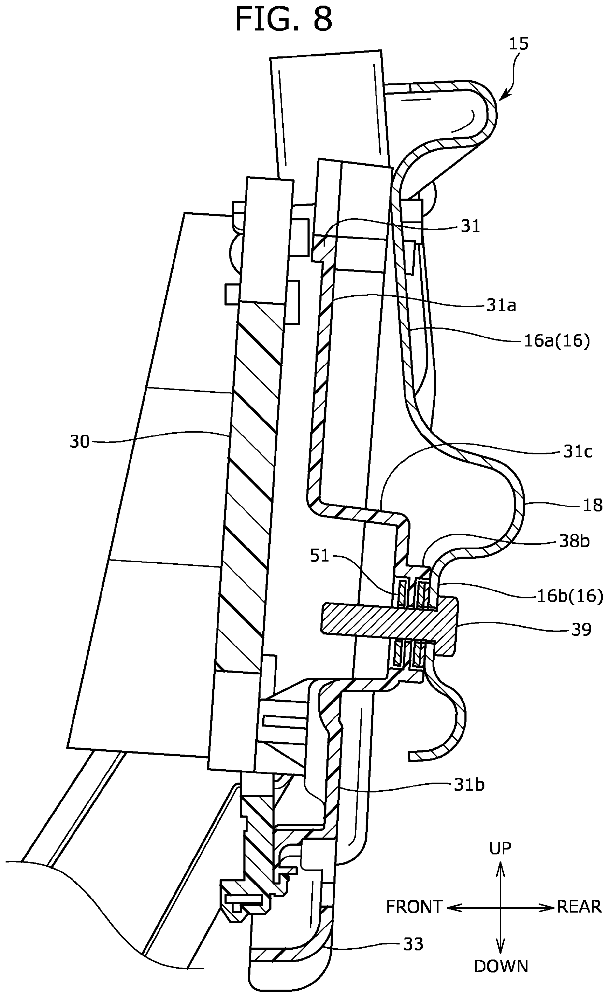

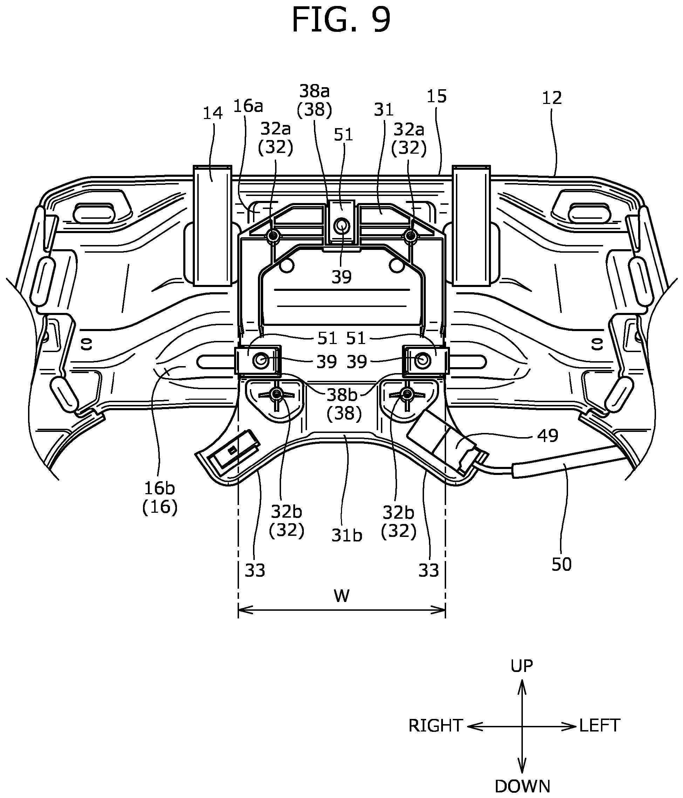

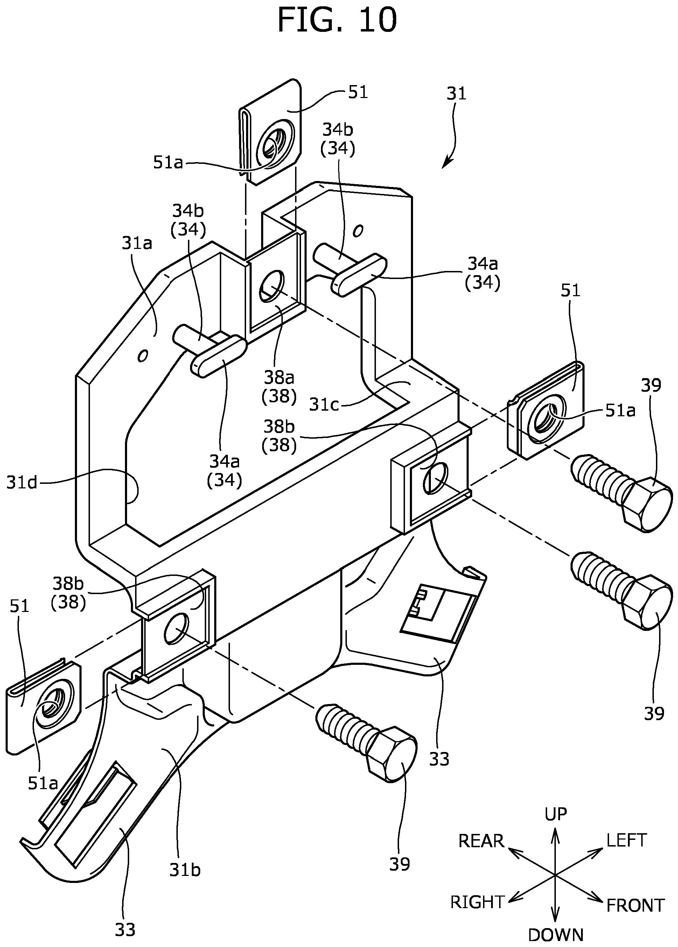

Hereinafter, the seat back frame 10 that the conveyance seat S of the present embodiment includes will be described in more detail. FIG. 7 is a cross-sectional view taken along line VII-VII of FIG. 3, and FIG. 8 is a cross-sectional view taken along line VIII-VIII of FIG. 3. FIG. 9 is a front view of the upper frame 12 to which the first mounting bracket 31 is fixed, and shows a state where the first blower 30 is removed. FIG. 10 is an exploded perspective view of the first mounting bracket 31.

As described above, the seat back frame 10 includes the upper frame 12 having a plate shape. In addition, the first blower 30 that is mounted on a surface 12a on a seated occupant side is mounted on the upper frame 12.

Conventionally, when a functional component such as a blower is mounted on an upper frame, the blower is mounted below the upper frame not to protrude forward (for example, refer to JP 2019-6392 A). For that reason, the mounting position of the blower is limited, which is a problem.

As shown in FIG. 7, in the conveyance seat S according to the present embodiment, a recess 15 into which the first blower 30 sinks in a direction separated from the seated occupant is formed on the surface 12a on the seated occupant side of the upper frame 12. In other words, the recess 15 that positions the first blower 30 further to the rear side is formed in the upper frame 12. The recess 15 corresponds to a first clearance portion of the present invention.

The recess 15 is formed by bending the upper frame 12 having a plate shape, and the first blower 30 is disposed in the recess 15. Therefore, even when the first blower 30 is located at a position where the first blower 30 overlaps the upper frame 12 in the front to rear direction, the first blower 30 can be compactly disposed without protruding forward.

The first blower 30 is fixed to the upper frame 12 via the first mounting bracket 31 (first mounting member) having a plate shape in the recess 15 of the upper frame 12.

A first bracket fixing portion 16 for fixing the first mounting bracket 31 is formed in the recess 15 of the upper frame 12. The first bracket fixing portion 16 corresponds to a mounting member fixing portion of the present invention.

The first bracket fixing portion 16 is composed of an upper bracket fixing portion 16a located on the upper side, and a lower bracket fixing portion 16b located on the lower side. In the upper bracket fixing portion 16a and the lower bracket fixing portion 16b located on the lower side, flat portions protruding forward are formed as bases for mounting the first mounting bracket 31. The upper bracket fixing portion 16a is fastened and fixed to an upper connection portion 38a of the first mounting bracket 31 by a bolt 39. In addition, the lower bracket fixing portion 16b is fastened and fixed to a lower connection portion 38b of the first mounting bracket 31 by the bolt 39. Incidentally, the bolts 39 are used as fastening members; however, tapping screws may be used.

By providing the first bracket fixing portion 16 in the upper frame 12, mounting workability of the first blower 30 is improved. In addition, a bead portion 18 protruding rearward is formed between the upper bracket fixing portion 16a and the lower bracket fixing portion 16b, and reinforces the recess 15 of the upper frame 12.

### <First mounting bracket 31>

The first mounting bracket 31 is used to fix the first blower 30 to the recess 15 of the upper frame 12. The first mounting bracket 31 is a member made of resin, and as shown in FIG. 10, a storage recess 31c and an opening portion 31d that stores the first blower 30 are formed in the first mounting bracket 31. The first mounting bracket 31 includes a first frame connection portion 38 that connects to the first bracket fixing portion 16 of the upper frame 12.

In detail, one upper connection portion 38a that connects to the upper bracket fixing portion 16a of the upper frame 12 is formed at an upper end portion 31a of the first mounting bracket 31.

In addition, two lower connection portions 38b that connect to the lower bracket fixing portion 16b of the upper frame 12 are formed in the storage recess 31c of the first mounting bracket 31. The two lower connection portions 38b are disposed at right and left end portions of the storage recess 31c. The upper connection portion 38a corresponds to a first connection portion of the present invention, and the lower connection portions 38b correspond to second connection portions of the present invention.

Since the first mounting bracket 31 is mounted on the upper frame 12 at three points: one point at the upper connection portion 38a and two points at the lower connection portions 38b, the first mounting bracket 31 can be firmly fixed in a simple manner.

### <Grommet 51>

As described above, the upper connection portion 38a and the lower connection portions 38b of the first mounting bracket 31 are fastened to the first bracket fixing portion 16 of the upper frame 12 by the bolts 39. Since the first mounting bracket 31 is made of resin, there is a possibility that the first mounting bracket 31 is damaged when the bolts 39 come into direct contact therewith. For that reason, grommets 51 are mounted on the upper connection portion 38a and the lower connection portions 38b.

As shown in FIG. 10, the grommets 51 are members that are formed in a clip shape, and are mounted by pinching the upper connection portion 38a or the lower connection portions 38b. Through-holes 51a that communicate with insertion holes when the grommets 51 are mounted on the upper connection portion 38a or the lower connection portions 38b, the bolts 39 being inserted into the insertion holes, are formed in the grommets 51. The grommets 51 can protect the upper connection portion 38a and the lower connection portions 38b by being fitted around the bolt insertion holes. In addition, the fixing force of the upper connection portion 38a and the lower connection portions 38b is strengthened by the grommets 51, and assembly is made easy. Since the grommets 51 are configured to be mountable by being inserted from the outside of the first mounting bracket 31 and pinching the upper connection portion 38a and the lower connection portions 38b, the mounting and removal of the grommets 51 are made easy.

### <Positioning portion 34>

As shown in FIG. 10, positioning portions 34 are provided on the right and left sides of the upper connection portion 38a in the seat width direction. The positioning portions 34 are formed with a T-shaped cross section, and stand upright toward the rear. Insertion holes 17 having a T-shape are formed in the upper bracket fixing portion 16a of the upper frame 12 at positions corresponding to the positioning portions 34 (refer to FIG. 4). The first mounting bracket 31 can be temporarily fastened to the upper frame 12 by inserting head portions 34a of the positioning portions 34 into the insertion holes 17 and then fitting strut portions 34b of the positioning portions 34 into recesses of the insertion holes 17 before fastening and fixing the first mounting bracket 31 using the bolts 39. The positioning of the first mounting bracket 31 is made easy by the temporary fastening, so that mounting workability is improved.

As shown in FIG. 9, an upper portion of the first mounting bracket 31 is disposed between the headrest holders 14 and 14 of the upper frame 12. In other words, a size W of the main body of the first mounting bracket 31 in the seat width direction is formed such that the main body fits between the headrest holders 14 and 14. By disposing the first mounting bracket 31 between the pair of headrest holders 14 and 14, the first mounting bracket 31 does not protrude toward the seat front side. Therefore, the conveyance seat S (in more detail, the seat back 1) can be made compact.

In addition, the upper connection portion 38a of the first mounting bracket 31 is interposed between the headrest holders 14 and 14 in the seat width direction. On the other hand, the lower connection portions 38b are not interposed between the headrest holders 14 and 14 in the seat width direction. By disposing the upper connection portion 38a between the headrest holders 14 and 14, the fixing strength can be improved. Since the grommets 51 are mounted on the lower connection portions 38b from the sides, by not disposing the lower connection portions 38b between the headrest holders 14 and 14, the headrest holders 14 and 14 are caused not to interfere with the mounting of the grommets 51, and the assembly of the first mounting bracket 31 is made easy.

### <Connector support portion 33>

The first mounting bracket 31 includes a connector support portion 33 at a lower end portion 31b of the first mounting bracket 31, the connector support portion 33 supporting a connector 49 that connects to the first blower 30. The connector support portions 33 are provided on both the right and left sides of the lower end portion 31b of the first mounting bracket 31. More specifically, the connector support portions 33 are provided in a tongue shape to extend outward and obliquely downward from the right and left sides of the lower end portion 31b of the first mounting bracket 31. The connector support portions 33 are configured to be located below a lower end of the upper frame 12 by extending outward and obliquely downward.

By providing the connector support portions 33 in the first mounting bracket 31, the mounting of the connector 49 is made easy, and mounting workability of the first blower 30 is improved. In addition, by providing the connector support portions 33 on both the right and left sides, the connector 49 is mounted using the connector support portion 33 located at a position close to a harness 50 even when the conveyance seat S is disposed on one of the right and left sides of the vehicle, so that the first mounting bracket 31 can be shared between right and left seats. In addition, by disposing the connector support portions 33 below the lower end of the upper frame 12, interference of the connector support portions 33 with the upper frame 12 is suppressed.

### <First blower fixing portion 32>

As shown in FIG. 9, four first blower fixing portions 32 are provided on a surface on the seated occupant side of the first mounting bracket 31. The first blower fixing portions 32 correspond to functional component fixing portions of the present invention. The first blower fixing portions 32 are disposed in the vicinities of four corners of the first mounting bracket 31, and two upper blower fixing portions 32a disposed on the upper side are disposed at positions where the upper connection portion 38a is interposed between the two upper blower fixing portions 32a. In other words, the upper connection portion 38a is interposed between the two upper blower fixing portions 32a.

In addition, two lower blower fixing portions 32b disposed on the lower side of the first mounting bracket 31 are disposed in the vicinities of the lower connection portions 38b. In other words, the two lower connection portions 38b are disposed adjacent to the lower blower fixing portions 32b. By disposing the upper connection portion 38a and the lower connection portions 38b in such a manner, the fixing strength is improved.

Incidentally, in the present embodiment, the recess 15 is formed in the upper frame 12 as the first clearance portion of the present invention; however, the present invention is not limited thereto, and the first clearance portion may be a through-hole formed in the upper frame 12. By inserting the first blower 30 into the through-hole to cause the first blower 30 to sink thereinto, and fixing the first blower 30, the forward protrusion of the first blower 30 can be suppressed.

In addition, the frame in which the recess 15 (first clearance portion) for mounting the first blower 30 is formed is not limited to the upper frame 12, and may be the lower frame 13 disposed on the lower side of the seat back frame 10, or a connecting frame (not illustrated) provided at the center of the seat back frame 10. In addition, the first functional component that is mounted on the recess 15 is not limited to the first blower 30, may be a sensor that acquires biological information of the seated occupant, and may be a vibration device, a heater, a speaker, or an air cell.

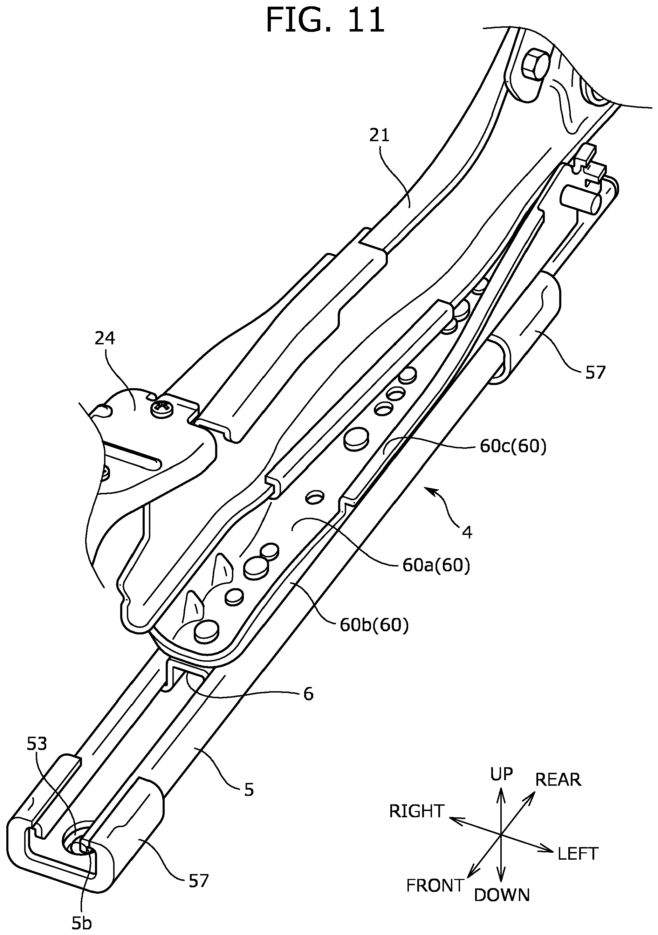

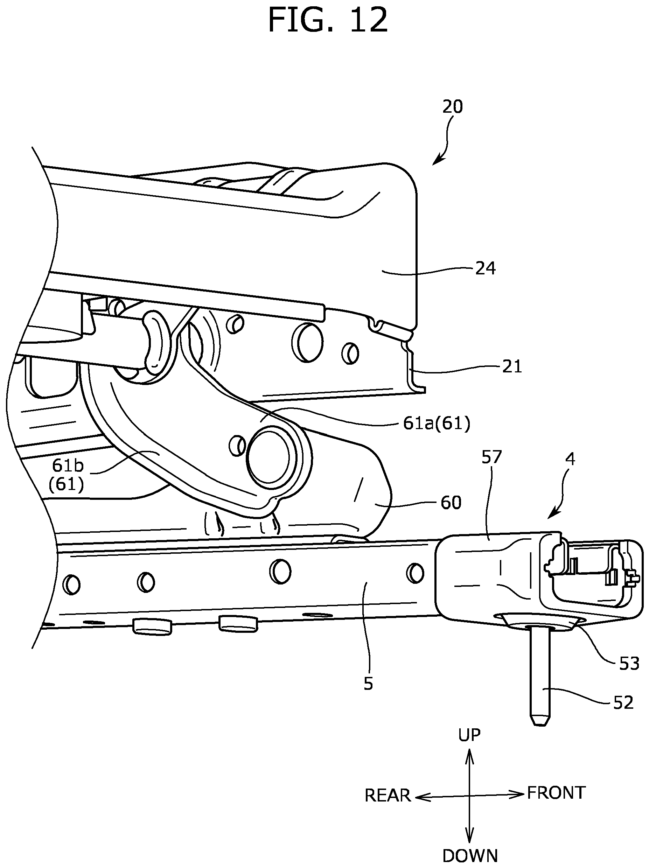

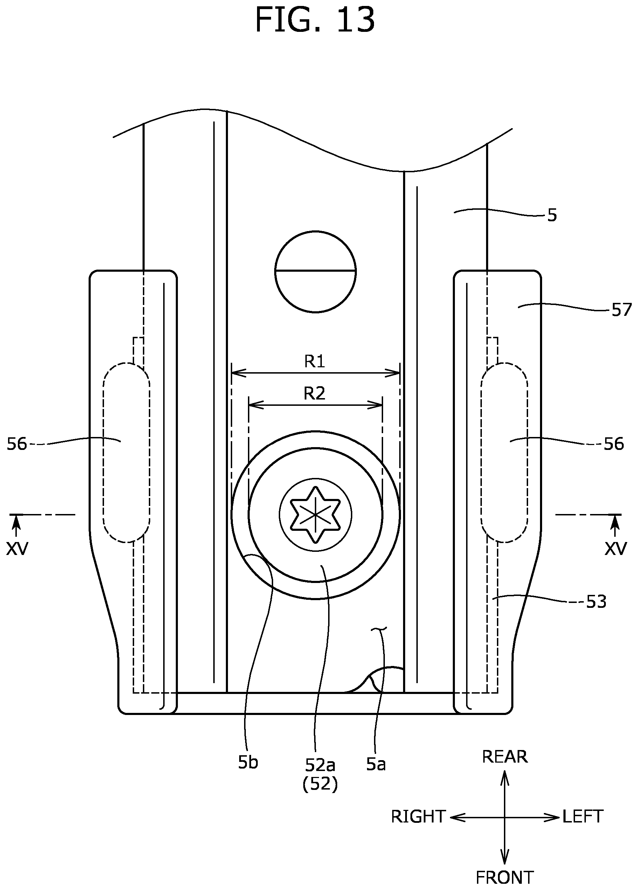

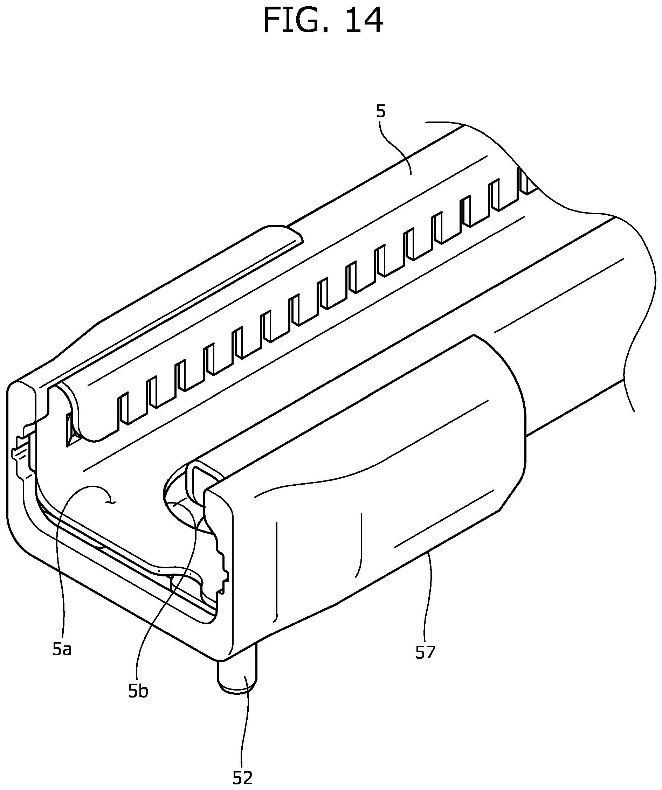

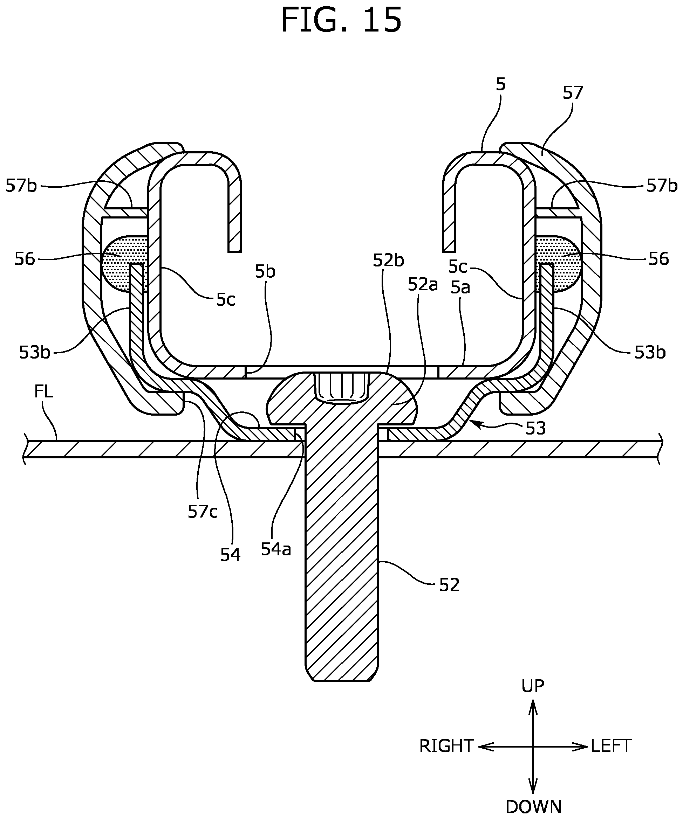

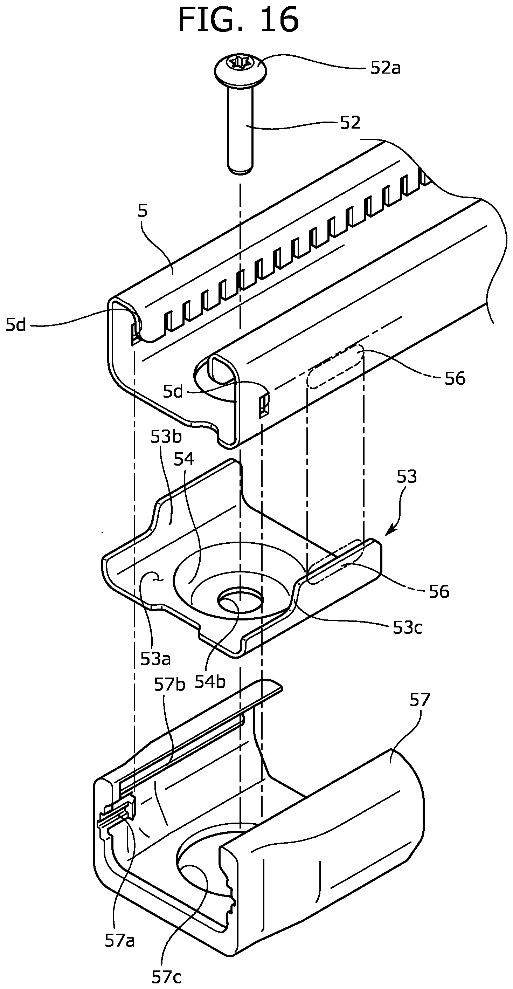

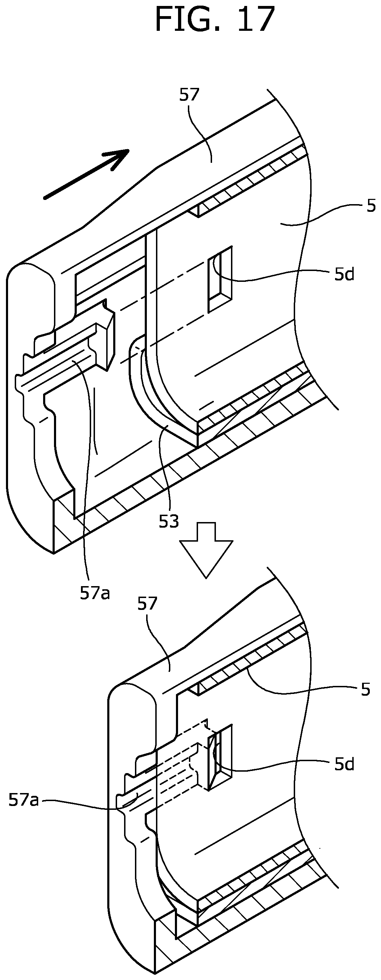

Next, the rail device 4 of the conveyance seat S according to the present embodiment will be described with reference to FIGS. 11 to 17. FIG. 11 is a perspective view of the rail device 4 when viewed obliquely from the front, and FIG. 12 is a perspective view of a front end portion of the rail device 4 when viewed from the inside of the conveyance seat S. FIG. 13 is a top view showing a tip portion of the lower rail 5, FIG. 14 is a perspective view showing the tip portion of the lower rail 5, FIG. 15 is a cross-sectional view taken along line XV-XV of FIG. 13, and FIG. 16 is an exploded perspective view of the tip portion of the lower rail 5. FIG. 17 is an explanatory view showing engagement between a tip of lower rail 5 and a cover member 57.

As described above, the rail device 4 is composed of the lower rail 5 that is fixed onto the vehicle body floor FL, and the upper rail 6 that is mounted on the seat frame F, and that slidably engages with the lower rail 5. In addition, the upper rail 6 is provided with a connecting bracket 60 that connects to the seat frame **F,** and the seat body Sh of the conveyance seat S is configured to move in the front to rear direction by sliding the upper rail 6 in the front to rear direction.

Conventionally, a lower rail is fixed to a vehicle body floor by directly mounting a fastening member such as a bolt on a bottom portion of the lower rail (refer to JP 2021-160408 A). However, since a head portion of the bolt is located at the bottom portion of the lower rail, the head portion of the bolt may interfere with an upper rail, and the movable range of the upper rail may be limited. In addition, since a through-hole is formed in the bottom portion of the lower rail, improving the strength of the rail and members around the rail has also been a problem. The conveyance seat S according to the present embodiment has been made in view of such problems, and there is provided the conveyance seat S including the rail device 4 that can be mounted on the floor without limiting the movement of the upper rail.

As shown in FIG. 15, the lower rail 5 of the conveyance seat S according to the present embodiment is fixed to the vehicle body floor FL by a bolt 52 (fastening member), and a recess 54 (second clearance portion) into which the bolt 52 sinks from a bottom portion 5a of the lower rail 5 is formed immediately below the lower rail 5 in the lower rail 5. In other words, the lower rail 5 is provided with the recess 54 that positions the bolt 52 below the bottom portion 5a of the lower rail 5.

More specifically, as shown in FIG. 13, an opening portion 5b through which a head portion 52a of the bolt 52 is inserted is formed in the bottom portion 5a of the tip portion of the lower rail 5. The opening portion 5b is formed in a circular shape, and a diameter R1 of the opening portion 5b is larger than a diameter R2 of the head portion of the bolt 52.

A holding member 53 that holds the head portion 52a of the inserted bolt 52 is mounted below the bottom portion 5a. The recess 54 is formed in a bottom portion 53a of the holding member 53, and is configured such that the head portion 52a of the bolt 52 is disposed in the recess 54 when the lower rail 5 is fixed.

By disposing the head portion 52a in the recess 54, the bolt 52 is sunk below the bottom portion 5a of the lower rail 5, and a top portion 52b of the bolt 52 is located below an upper surface of the bottom portion 5a of the lower rail 5.

### <Holding member 53>

The holding member 53 is a member made of metal and formed by bending a plate-shaped member. As shown in FIG. 15, the recess 54 having a circular shape when viewed from above is formed at the center of the bottom portion 53a of the holding member 53. A through-hole 54a through which a shaft portion of the bolt 52 is inserted is formed at the center of the recess 54.

The holding member 53 is formed with a U-shaped cross section as a whole, the lower rail 5 is pinched between both side portions 53b and 53b formed by bending, and in that state, the holding member 53 can be mounted on the bottom portion 5a of the lower rail 5.

The holding member 53 mounted on the bottom portion 5a of the lower rail 5 is fixed to side portions 5c of the lower rail 5 by welding. In other words, both the side portions 53b and 53b of the holding member 53 are fixed to both the side portions 5c and 5c of the lower rail 5 using holding member fixing portions 56 by welding. By disposing the holding member fixing portions 56 in such a manner, the lower rail 5 can be made more compact, and the strength of the lower rail 5 can be improved.

In addition, as shown in FIG. 13, two holding member fixing portions 56 are disposed at positions where the bolt 52 is interposed between the two holding member fixing portions 56 when viewed from above. By disposing the two holding member fixing portions 56 so as to interpose the bolt 52 therebetween, the strength of the vicinity of the bolt 52 is improved.

In addition, step portions 53c are formed by cutouts in the side portions 53b of the holding member 53 at positions corresponding to cover engaged portions 5d of the lower rail 5. By forming the step portions 53c, the cover engaged portions 5d are not covered by the side portions 53b, and engagement of the cover engaged portions 5d with the cover member 57 to be described later is not hindered.

In addition, the holding member fixing portions 56 are provided in the vicinities of the cover engaged portions 5d. By providing the holding member fixing portions 56 in the vicinities of the cover engaged portions 5d, the strength can be improved. In addition, the holding member fixing portions 56 and the cover engaged portions 5d are provided at substantially the same height, and can be compactly disposed.

### <Cover member 57>

The cover member 57 that covers a portion of the lower rail 5, on which the holding member 53 is mounted, is provided at the tip portion of the lower rail 5. The cover member 57 is a member made of resin, and is formed such that the cross section thereof has a substantially U-shape.

A through-hole 57c into which the recess 54 of the holding member 53 is inserted is formed in a bottom portion of the cover member 57.

In addition, engaging portions 57a having a pawl shape and extending from a tip of the cover member 57 toward the rear are formed on an inner side of the cover member 57. In addition, the cover engaged portions 5d are formed at the tip portion of the lower rail 5 at positions corresponding to the engaging portion 57a. As shown in FIG. 17, when the cover member 57 is mounted, the cover member 57 can be fixed by engaging the engaging portion 57a with the cover engaged portions 5d of the lower rail 5.

In addition, side surface portions of the cover member 57 include bulging portions bulging toward the outside to store the holding member fixing portions 56. Ribs 57b are formed on inner sides of the bulging portions. The ribs 57b are provided such that tips of the ribs 57b come into contact with side surfaces of the lower rail 5 when the cover member 57 is mounted. In addition, the ribs 57b are mounted to be located above the holding member fixing portions 56. The strength of the cover member 57 is improved by positioning the holding member fixing portions 56 below the ribs 57b.

### <Connecting bracket 60 and link 61>

As shown in FIG. 11, the upper rail 6 that slides on the lower rail 5 is provided with the connecting bracket 60. In addition, as shown in FIG. 12, a plurality of links 61 that connect to the cushion side frames 21 and 21 of the seat cushion frame 20 are rotatably mounted on the connecting brackets 60. The height of the seat cushion 2 can be changed by rotating the links 61.

The connecting bracket 60 of the present embodiment is composed of a bottom portion 60a that connects to the upper rail 6, and a wall portion 60b that stands upright from the periphery of the bottom portion 60a. In addition, a flange 60c extending toward the outside in the seat width direction is formed at an upper end of the wall portion 60b. By forming the flange 60c, strength around the rail is improved.

In addition, as shown in FIG. 12, a flange 61b extending from a side portion of a link body 61a toward the inside in the seat width direction is formed in each of the links 61, and strength around the rail is improved.

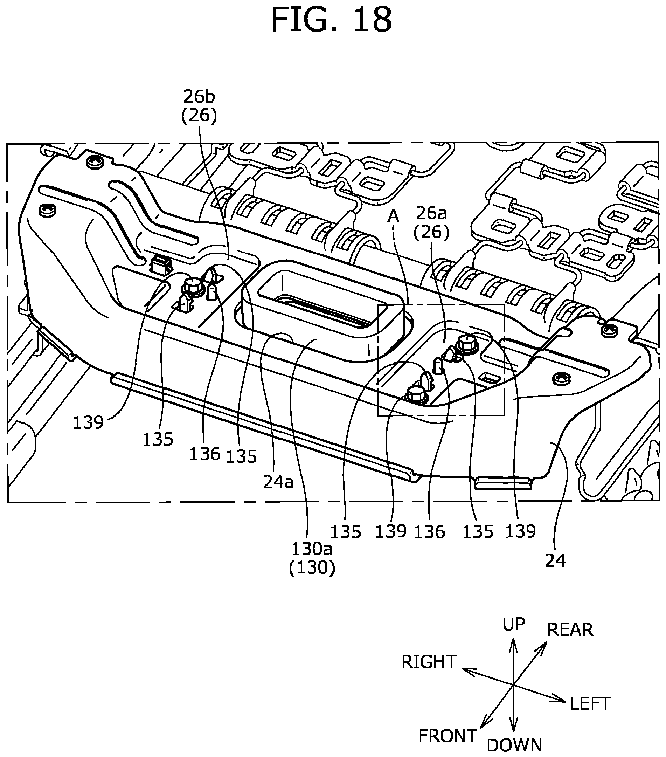

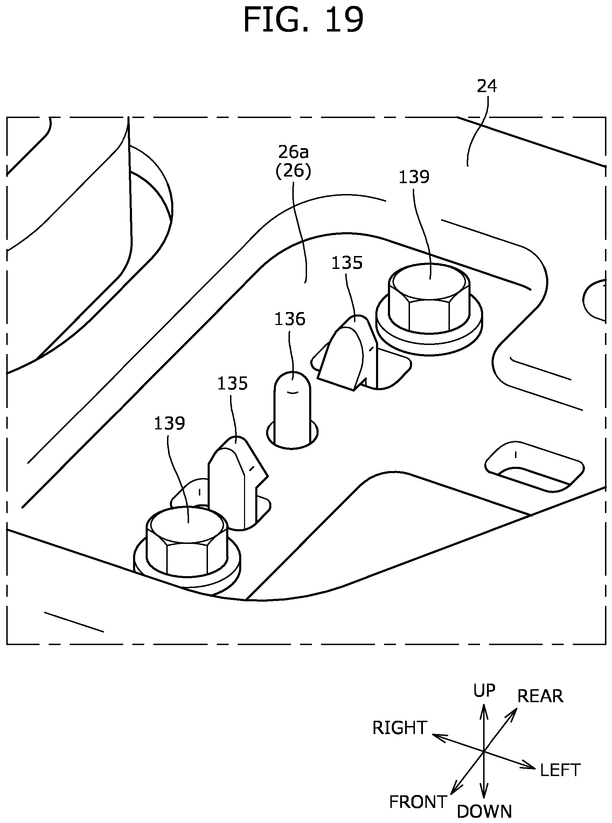

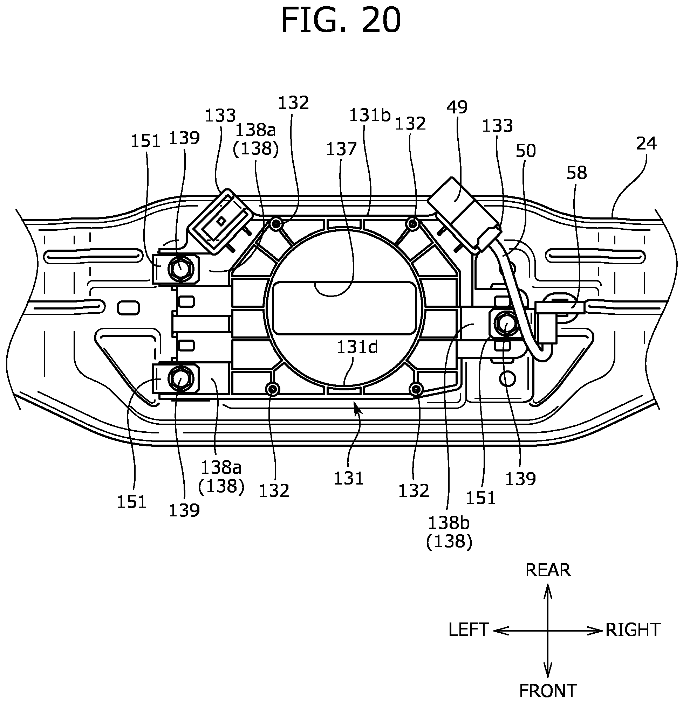

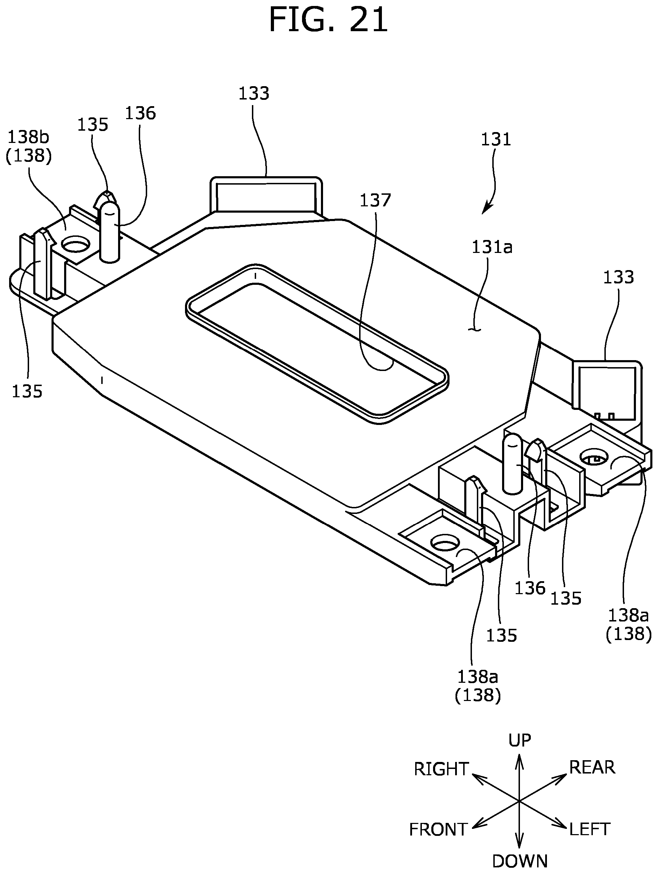

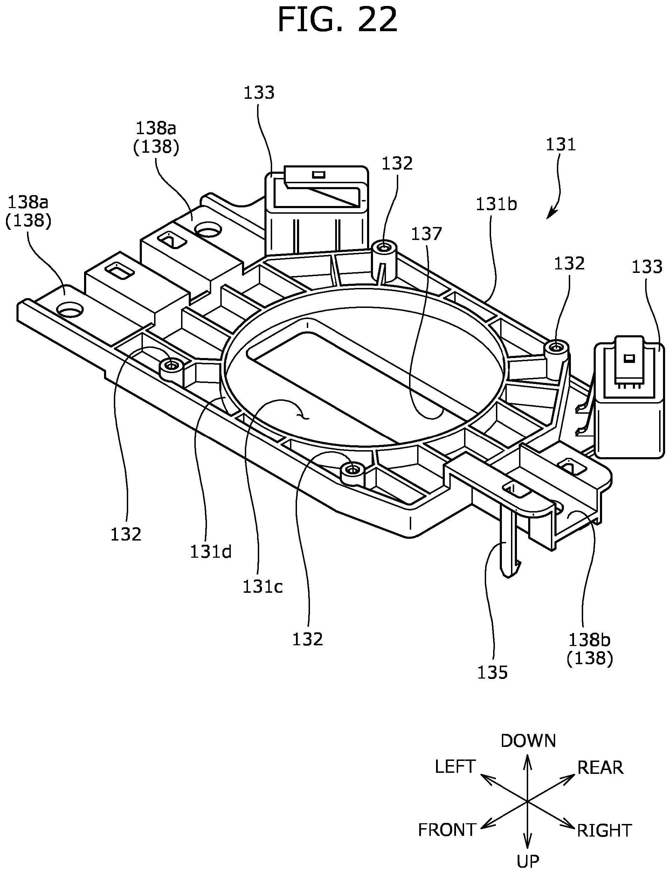

Next, the seat cushion frame 20 that the conveyance seat S according to the present embodiment includes will be described using FIGS. 18 to 22. FIG. 18 is a perspective view showing the pan frame 24 on which the second blower 130 is mounted, and FIG. 19 is a partial enlarged perspective view showing a portion A of FIG. 18. FIG. 20 is a bottom view of the pan frame on which the second mounting bracket 131 is mounted, and is a view showing a state where the second blower 130 is removed. FIG. 21 is a perspective view showing an upper surface side of the second mounting bracket 131, and FIG. 22 is a perspective view showing a lower surface side of the second mounting bracket 131.

Conventionally, when a functional component such as a blower is mounted on a seat cushion frame, the functional component is not directly mounted, but is mounted via a mounting bracket. The mounting bracket is fastened and fixed to a seat frame using a fastening member such as a bolt, but typically is temporarily fastened to the seat frame using a locking pawl or the like before being fastened and fixed. In a conveyance seat disclosed in JP 2021-112586 A, a mounting bracket is temporarily fastened using one locking pawl, and then is fastened and fixed.

However, the accuracy of temporary fastening or holding force of the mounting bracket when temporarily fastened using one locking pawl is low, and there is a possibility that ease of assembly deteriorates. The conveyance seat S according to the present embodiment has been made in view of such a problem, and there is provided the conveyance seat S in which ease of assembly is improved by increasing the accuracy of temporary fastening or holding force of the mounting bracket for mounting the functional component when temporarily fastened.

As shown in FIGS. 5, 6, and 19, the conveyance seat S according to the present embodiment includes the second blower 130. The second blower 130 is mounted on the pan frame 24. The second blower 130 is a device that sends out air to the seated occupant, and corresponds to a second functional component of the present invention. The air sent out from the second blower 130 passes through a duct 130a provided inside the seat cushion **2,** and is sent to the second blowing port 140 of the seat cushion **2.**

The conveyance seat S includes the second mounting bracket 131 (second mounting member) that is fixed to the second blower 130, and that mounts the second blower 130 on the pan frame 24. The second mounting bracket 131 is a member made of resin and formed in a plate shape as a whole, and as shown in FIGS. 21 and 22, an opening portion 137 through which the duct 130a extending from the second blower 130 is inserted is formed at the center of the second mounting bracket 131.

The second mounting bracket 131 is fastened and fixed to the pan frame 24 of the seat cushion frame 20 by a plurality of bolts 139 (a plurality of fastening members). The bolts 139 are used as fastening members; however, fastening and fixing may be performed using tapping screws.

As shown in FIG. 21, the second mounting bracket 131 includes a plurality of temporary fastening portions 135 that temporarily fasten the second mounting bracket 131 to the pan frame 24, and as shown in FIG. 18, the plurality of temporary fastening portions 135 are disposed at positions where the second blower 130 is interposed between the plurality of temporary fastening portions 135. The second mounting bracket 131 is temporarily fastened to the pan frame 24 by the plurality of temporary fastening portions 135 before being fastened and fixed to the pan frame 24 by the bolts 139. In such a manner, by disposing the plurality of temporary fastening portions 135 so as to interpose the second blower 130 therebetween, the accuracy of temporary fastening or holding force centered on the second blower 130 can be improved, and ease of assembly can be improved.

As shown in FIG. 21, tips of the temporary fastening portions 135 are formed in a pawl shape. By inserting the temporary fastening portions 135 into insertion holes of the pan frame 24, the insertion holes being formed at corresponding positions, and hooking the tips onto the insertion holes, the second mounting bracket 131 can be temporarily fastened to the pan frame 24.

Two temporary fastening portions 135 are disposed on each of the right and left sides of the second blower 130 in the seat width direction. The two temporary fastening portions 135 disposed on the left side of the second blower 130 are disposed side by side in the seat front to rear direction. The two temporary fastening portions 135 disposed on the right side of the second blower 130 are disposed side by side in the seat front to rear direction.

In the present embodiment, the two temporary fastening portions 135 are provided on each of the right and left sides of the second blower 130; however, the present invention is not limited thereto, one temporary fastening portion 135 may be provided on each of the right and left sides, and three or more temporary fastening portions 135 may be provided on each of the right and left sides.

The temporary fastening portions 135 can be compactly disposed by being disposed on the right and left sides. In addition, the accuracy of temporary fastening is improved by disposing the temporary fastening portions 135 side by side in the front to rear direction.

A duct insertion portion 24a through which the duct 130a of the second blower 130 is inserted is formed in the pan frame 24. The duct insertion portion 24a is a through-hole formed in the pan frame 24.

In addition, the pan frame 24 is provided with a second bracket fixing portion 26 for fixing the second mounting bracket 131. The second bracket fixing portion 26 is composed of left bracket fixing portions 26a formed on the left side of the duct insertion portion 24a, and a right bracket fixing portion 26b formed on the right side. The left bracket fixing portions 26a and the right bracket fixing portion 26b are formed as recesses that are recessed downward. The plurality of temporary fastening portions 135 of the second mounting bracket 131 are inserted and hooked onto through-holes formed in the second bracket fixing portion 26.

The second mounting bracket 131 includes a second frame connection portion 138 that connects to the second bracket fixing portion 26 of the pan frame 24.

In detail, as shown in FIG. 20, one right connection portion 138b that connects to the right bracket fixing portion 26b of the pan frame 24 is provided at a right portion of the second mounting bracket 131. In addition, two left connection portions 138a that connect to the left bracket fixing portions 26a of the pan frame 24 are provided side by side in the seat front to rear direction at a left portion of the second mounting bracket 131.

Since the second mounting bracket 131 is mounted on the pan frame 24 at three points: one point at the right connection portion 138b and two points at the left connection portions 138a, the second mounting bracket 131 can be firmly fixed in a simple manner.

### <Grommet 151>

As described above, the left connection portions 138a and the right connection portion 138b of the second mounting bracket 131 are fastened to the second bracket fixing portion 26 of the pan frame 24 by the bolts 139. Since the second mounting bracket 131 is made of resin, there is a possibility that the second mounting bracket 131 is damaged when the bolts 139 come into contact therewith. For that reason, grommets 151 are mounted on the left connection portions 138a and the right connection portion 138b. Since a configuration of the grommets 151 is the same as that of the grommets 51 provided on the first mounting bracket 31, a detailed description thereof will be omitted.

The grommets 151 can protect the left connection portions 138a and the right connection portion 138b by being fitted around bolt insertion holes of the left connection portions 138a and the right connection portion 138b. In addition, the fixing force of the left connection portions 138a and the right connection portion 138b is strengthened, and assembly is made easy.

Incidentally, the temporary fastening portions 135 are disposed at positions avoiding the grommets 151, namely, at positions where the grommets 151 are not provided. Accordingly, ease of mounting is improved.

As shown in FIG. 18, the temporary fastening portions 135 disposed on the right side of the second mounting bracket 131 are disposed at positions where the bolt 139 that is fastened at the right connection portion 138b is interposed between the temporary fastening portions 135. The accuracy of temporary fastening is improved by disposing the temporary fastening portions 135 in such a manner.

In addition, the temporary fastening portions 135 disposed on the left side are disposed at positions interposed between two bolts 139 to be fastened at the left connection portions 138a. The second mounting bracket 131 can be more firmly fixed by disposing the temporary fastening portions 135 in such a manner.

### <Connector support portion 133>

As shown in FIG. 20, the second mounting bracket 131 includes a connector support portion 133 at a rear end portion 131b of the first mounting bracket 31, the connector support portion 133 supporting the connector 49 that connects to the second blower 130. The connector support portions 133 are provided on both the right and left sides of the rear end portion 131b of the second mounting bracket 131. The connector 49 is mounted on the connector support portion 133, and the harness 50 extending from the connector 49 is connected to a power supply, an ECU, or the like of the vehicle. The harness 50 is fixed to a lower surface of the second mounting bracket 131 by a clip 58.

By providing the connector support portions 33 in the second mounting bracket 131, the mounting of the connector 49 is made easy, and mounting workability of the second blower 130 is improved. In addition, by providing the connector support portions 33 on both the right and left sides, the connector 49 is mounted using the connector support portion 33 located at a position close to the harness 50 extending from the power supply or the like even when the conveyance seat S is disposed on one of the right and left sides of the vehicle. For that reason, the second mounting bracket 131 can be shared between the right and left seats. In addition, the connector support portions 133 are provided at positions avoiding the temporary fastening portions 135. Therefore, ease of mounting is further improved.

As described above, the opening portion 137 through which the duct 130a of the second blower 130 is inserted is formed at the center of the second mounting bracket 131.

The plurality of temporary fastening portions 135 provided in the second mounting bracket 131 are disposed at positions where the opening portion 137 is interposed between the plurality of temporary fastening portions 135. By disposing the plurality of temporary fastening portions 135 in such a manner, the accuracy of temporary fastening can be improved, and the strength can be improved. In addition, the temporary fastening portions 135 can be compactly disposed by being provided on the right and left sides of the duct insertion portion 24a.

### <Rib 131d>

As shown in FIG. 21, a rib 131d protruding downward is provided on a lower surface 131c of the second mounting bracket 131. Particularly, a part of the rib 131d is formed in a circular shape so as to surround the opening portion 137, and therefore, the rigidity around the opening portion 137 is improved.

### <Second blower fixing portion 132>

In addition, as shown in FIGS. 19 and 21, a second blower fixing portion 132 (functional component fixing portion) for fixing the second blower 130 to the second mounting bracket 131 is provided on the lower surface 131c of the second mounting bracket 131. In the present embodiment, four second blower fixing portions 132 are provided around the opening portion 137.

### <Guide portion 136>

The second mounting bracket 131 includes guide portions 136 that guide the temporary fastening portions 135 when the second mounting bracket 131 is temporarily fastened by the plurality of temporary fastening portions 135. The guide portions 136 are columnar members that stand upright from an upper surface 131a of the second mounting bracket 131, and one guide portion 136 is provided on each of the right and left sides of the duct insertion portion 24a.

In addition, the guide portion 136 is provided in the vicinity of at least one of the plurality of temporary fastening portions 135. Particularly, the guide portion 136 provided on the left side is disposed between two temporary fastening portions disposed in the front and rear. The temporary fastening of the second mounting bracket 131 is made easy by providing the guide portion 136 in the vicinity of the temporary fastening portions 135 or disposing the guide portions 136 between the temporary fastening portions 135.

In the present embodiment, the second mounting bracket 131 is mounted on the pan frame 24 of the seat cushion frame 20; however, the second mounting bracket 131 may be mounted on the upper frame 12 or the lower frame 13 of the seat back frame 10. In this case, the plurality of temporary fastening portions 135 disposed on the right side or left side of the opening portion 137 through which the duct is inserted are aligned in the up to down direction of the conveyance seat S.

In addition, the second functional component that is mounted on the pan frame 24 is not limited to the second blower 130, and may be a sensor that acquires biological information of the seated occupant. In addition, the second functional component may be a vibration device, a heater, a speaker, or an air cell.

Hereinafter, supplementary notes regarding the present embodiment will be provided.

### (Supplementary Note 1)

A conveyance seat of Supplementary Note 1 includes a seat frame, and a rail device composed of a lower rail that is fixed to a floor and an upper rail that is mounted on the seat frame and that slidably engages with the lower rail. The lower rail is fixed to the floor by a fastening member. A second clearance portion into which the fastening member sinks from a bottom portion of the lower rail is formed immediately below the lower rail in the lower rail.

By forming the clearance portion at the bottom portion of the lower rail, the fastening member sinking into the clearance portion, a head portion of the fastening member is lowered, and interference with the upper rail is suppressed. For that reason, it is possible to provide the conveyance seat including the rail device that can be mounted on the floor without limiting the movement of the upper rail.

### (Supplementary Note 2)

According to the conveyance seat of Supplementary Note **2,** in the conveyance seat described in Supplementary Note 1, the second clearance portion is a recess formed below the lower rail, and a head portion of the fastening member is disposed in the recess.

By disposing the head portion of the fastening member in the recess, interference with the upper rail is suppressed, and hindrance to the movement of the upper rail is suppressed.

### (Supplementary Note 3)

According to the conveyance seat of Supplementary Note **3,** in the conveyance seat described in Supplementary Note **1,** a top portion of the fastening member, which sinks into the second clearance portion, is located below an upper surface of the bottom portion of the lower rail.

By positioning the top portion of the fastening member below the upper surface of the bottom portion of the lower rail, hindrance to the movement of the upper rail is suppressed.

### (Supplementary Note 4)

In the conveyance seat described in Supplementary Note 1, the conveyance seat of Supplementary Note 4 further includes a holding member formed on the bottom portion of the lower rail, and including a through-hole through which the fastening member is inserted, and a recess that is disposed below the through-hole and that holds a head portion of the inserted fastening member, as the second clearance portion. The holding member is fixed to a side portion of the lower rail by welding.

By fixing the holding member to the side portion of the lower rail through welding, no adhesive member intervenes in an up to down direction, and compactness in the up to down direction can be achieved.

### (Supplementary Note 5)

According to the conveyance seat of Supplementary Note 5, in the conveyance seat described in Supplementary Note 4, fixing portions that fix the holding member to the lower rail are provided on both side portions of the lower rail.

By providing the fixing portions for fixing the holding member on both the side portions of the lower rail, the lower rail is pinched, and the strength of the lower rail is improved.

### (Supplementary Note 6)

According to the conveyance seat of Supplementary Note 6, in the conveyance seat described in Supplementary Note 5, the fixing portions provided on both the side portions of the lower rail are provided at positions where the fastening member is interposed between the fixing portions when viewed from above.

By providing the fixing portions at positions where the fastening member is interposed between the fixing portions, strength around the fastening member is improved.

### (Supplementary Note 7)

In the conveyance seat described in Supplementary Note 5, the conveyance seat of Supplementary Note 7 further includes a cover member that covers a portion of the lower rail, on which the holding member is mounted. Cover engaged portions that engage with engaging portions of the cover member are formed in the side portions of the lower rail. Step portions are formed in side surface portions of the holding member at positions where the step portions do not overlap the cover engaged portions.

By providing the step portions in the side surface portions of the holding member, the step portions not overlapping the cover engaged portions, the mounting of the cover member is not hindered.

### (Supplementary Note 8)

According to the conveyance seat of Supplementary Note 8, in the conveyance seat described in Supplementary Note 5, the fixing portions are provided in the vicinities of the cover engaged portions.

By providing the fixing portions in the vicinities of the cover engaging portions, strength around the cover engaged portions is improved.

### (Supplementary Note 9)

According to the conveyance seat of Supplementary Note 9, in the conveyance seat described in Supplementary Note 8, the fixing portions are provided at the same height as the cover engaged portions.

By providing the fixing portions at the same height as the cover engaged portions, a compact disposition can be achieved.

### (Supplementary Note 10)

According to the conveyance seat of Supplementary Note 10, in the conveyance seat described in Supplementary Note 7, ribs that come into contact with side surfaces of the lower rail are formed on an inner side of the cover member, and the fixing portions are located below the ribs.

By forming the ribs, which come into contact with the side surfaces of the lower rail, on the inner side of the cover member, strength around the ribs is improved.

### (Supplementary Note 11)

A conveyance seat of Supplementary Note 10 includes a seat frame; a second functional component; and a second mounting member that is fixed to the second functional component, and that mounts the second functional component on the seat frame. The second mounting member includes a plurality of temporary fastening portions that temporarily fasten the second mounting member to the seat frame, and the plurality of temporary fastening portions are disposed at positions where the second functional component is interposed between the plurality of temporary fastening portions.

By providing the plurality of temporary fastening portions that temporarily fasten the mounting member to the seat frame, and disposing the plurality of temporary fastening portions so as to interpose the second functional component therebetween, for example, the accuracy of temporary fastening or holding force centered on the second functional component is increased, so that it is possible to provide the conveyance seat with improved ease of assembly.

### (Supplementary Note 12)

According to the conveyance seat of Supplementary Note 12, in the conveyance seat described in Supplementary Note 11, the plurality of temporary fastening portions are disposed on right and left sides of the second functional component in a seat width direction.

By disposing the temporary fastening portions on the right and left sides of the second functional component, the accuracy of temporary fastening can be further improved, and a compact disposition can be achieved.

### (Supplementary Note 13)

According to the conveyance seat of Supplementary Note 13, in the conveyance seat described in Supplementary Note 11, the plurality of temporary fastening portions are disposed side by side in a seat front to rear direction or an up to down direction.

By disposing the plurality of temporary fastening portions side by side in the seat front to rear direction or the up to down direction, the accuracy of temporary fastening can be improved.

### (Supplementary Note 14)

According to the conveyance seat of Supplementary Note 14, in the conveyance seat described in Supplementary Note 11, the second mounting member is fixed to the seat frame by a plurality of fastening members, and the plurality of fastening members are disposed at positions where at least one of the plurality of temporary fastening portions is interposed between the plurality of fastening members.

By disposing the fastening members at positions where one of the temporary fastening portions is interposed therebetween, the mounting member can be more firmly fixed to the frame.

### (Supplementary Note 15)

According to the conveyance seat of Supplementary Note 15, in the conveyance seat described in Supplementary Note 11, the second mounting member is fixed to the seat frame by a plurality of fastening members, and the plurality of temporary fastening portions are disposed at positions where at least one of the plurality of fastening members is interposed between the plurality of temporary fastening portions.

By disposing the plurality of temporary fastening portions at positions where the fastening member is interposed therebetween, the accuracy of temporary fastening can be improved.

### (Supplementary Note 16)

According to the conveyance seat of Supplementary Note 16, in the conveyance seat described in Supplementary Note 11, the second mounting member includes a connector support portion that supports a connector that connects to the second functional component, and the connector support portion is provided at a position avoiding the plurality of temporary fastening portions.

By providing the connector support portion at a position avoiding the temporary fastening portions, the mounting workability of the connector can be improved.

### (Supplementary Note 17)

According to the conveyance seat of Supplementary Note 17, in the conveyance seat described in Supplementary Note 11, an opening portion is formed in the second mounting member, and the plurality of temporary fastening portions are disposed at positions where the opening portion is interposed between the plurality of temporary fastening portions.

By disposing the plurality of temporary fastening portions so as to interpose the opening portion therebetween, the accuracy of temporary fastening is improved, and strength around the opening portion is improved.

### (Supplementary Note 18)

According to the conveyance seat of Supplementary Note 18, in the conveyance seat described in Supplementary Note 17, the plurality of temporary fastening portions interposing the opening portion between the plurality of temporary fastening portions are disposed on right and left sides of the opening portion in a seat width direction.

By disposing the plurality of temporary fastening portions on the right and left sides of the opening portion, a more compact disposition can be achieved.

### (Supplementary Note 19)

According to the conveyance seat of Supplementary Note 19, in the conveyance seat described in Supplementary Note 11, the second mounting member is fixed to the seat frame by a plurality of fastening members, and a grommet is provided between each of the plurality of fastening members and the second mounting member.

By providing the grommets, fixing strength by the fastening members is improved.

### (Supplementary Note 20)

According to the conveyance seat of Supplementary Note 20, in the conveyance seat described in Supplementary Note 19, the plurality of temporary fastening portions are disposed at positions avoiding the grommets.

By disposing the temporary fastening portions at positions avoiding the grommets, the mounting workability of the grommets is improved.

### (Supplementary Note 21)

According to the conveyance seat of Supplementary Note 20, in the conveyance seat described in Supplementary Note 11, an opening portion is formed in the second mounting member, and the second mounting member includes a rib surrounding the opening portion on a lower surface of the second mounting member.

By providing the rib surrounding the opening portion, the rigidity of the mounting member is improved.

### (Supplementary Note 22)

According to the conveyance seat of Supplementary Note 20, in the conveyance seat described in Supplementary Note 11, the second mounting member includes a guide portion that guides the plurality of temporary fastening portions, and the guide portion is disposed in the vicinity of at least one of the plurality of temporary fastening portions.

By disposing the guide portion in the vicinity of the temporary fastening portion, temporarily fastening is made easy.

### (Supplementary Note 23)

According to the conveyance seat of Supplementary Note 20, in the conveyance seat described in Supplementary Note 12, the guide portion is disposed between two temporary fastening portions adjacent to each other among the plurality of temporary fastening portions.

By disposing the guide portion between the two temporary fastening portions adjacent to each other, temporarily fastening is made easier.
Further embodiments of the invention are as follows:
1. A conveyance seat, comprising:
   a seat back frame including a pair of side frames, and a connection frame having a plate shape and disposed between the pair of side frames; and
   a first functional component that is mounted on a surface on a seated occupant side of the connection frame,
   wherein a first clearance portion into which the first functional component sinks in a direction separated from a seated occupant is formed on the surface on the seated occupant side of the connection frame.
2. The conveyance seat according to embodiment 1,
   wherein the first clearance portion is a recess formed on the surface on the seated occupant side of the connection frame, and the first functional component is disposed in the recess.
3. The conveyance seat according to embodiment 1,
   wherein the seat back frame includes a first mounting member that mounts the first functional component on the connection frame, and
   a mounting member fixing portion formed to protrude from the first clearance portion toward the seated occupant side is formed in the connection frame.
4. The conveyance seat according to embodiment 3,
   wherein the first mounting member includes a connector support portion at a lower end portion of the first mounting member, the connector support portion supporting a connector that connects to the first functional component.
5. The conveyance seat according to embodiment 4,
   wherein the connector support portions are provided on both right and left sides of the lower end portion of the first mounting member.
6. The conveyance seat according to embodiment 4,
   wherein the connector support portion is disposed below a lower end of the connection frame.
7. The conveyance seat according to embodiment 3,
   wherein the seat back frame includes a pair of headrest holders that are mounted on the connection frame, and that support a headrest, and
   the first mounting member is disposed between the pair of headrest holders.
8. The conveyance seat according to embodiment 3,
   wherein the first mounting member is fixed to the connection frame at three points located on a first connection portion disposed at an upper end portion of the first mounting member and two second connection portions disposed at a lower end portion of the first mounting member.
9. The conveyance seat according to embodiment 8,
   wherein the first mounting member includes positioning portions on both right and left sides of the first connection portion, the positioning portions positioning a position of the first mounting member with respect to the connection frame.
10. The conveyance seat according to embodiment 8,
   wherein grommets are provided on the first connection portion and the second connection portions of the first mounting member.
11. The conveyance seat according to embodiment 8,
   wherein the seat back frame includes a pair of headrest holders that are mounted on the connection frame, and that support a headrest, and
   the first connection portion is disposed between the pair of headrest holders, and the second connection portions are not disposed between the pair of headrest holders.
12. The conveyance seat according to embodiment 8,
   wherein the first mounting member includes a plurality of functional component fixing portions that fix the first functional component to the first mounting member,
   the first connection portion is disposed between two functional component fixing portions adjacent to each other among the plurality of functional component fixing portions, and
   the second connection portions are disposed in the vicinities of two functional component fixing portions disposed on a lower side of the first mounting member among the plurality of functional component fixing portions.
13. The conveyance seat according to embodiment 1,
   wherein a seat frame including the seat back frame and a seat cushion frame, and a rail device composed of a lower rail that is fixed to a floor and an upper rail that is mounted on the seat frame and that slidably engages with the lower rail are provided,
   the lower rail is fixed to the floor by a fastening member, and
   a second clearance portion into which the fastening member sinks from a bottom portion of the lower rail is formed immediately below the lower rail in the lower rail.
14. The conveyance seat according to embodiment **1,**
   wherein a seat frame including the seat back frame and a seat cushion frame, a second functional component, and a second mounting member that is fixed to the second functional component and that mounts the second functional component on the seat frame are provided,
   the second mounting member includes a plurality of temporary fastening portions that temporarily fasten the second mounting member to the seat frame, and
   the plurality of temporary fastening portions are disposed at positions where the second functional component is interposed between the plurality of temporary fastening portions.

### REFERENCE SIGNS LIST

S: conveyance seat
F: seat frame
T: skin material
P: pad member
FL: vehicle body floor
1: seat back
2: seat cushion
3: headrest
   3a: headrest stay
4: rail device
5: lower rail
   5a: bottom portion
   5b: opening portion
   5c: side portion
   5d: cover engaged portion
6: upper rail
7: reclining mechanism
10: seat back frame
11: back side frame (side frame)
12: upper frame (connection frame)
   12a: surface on seated occupant side
13: lower frame
14: headrest holder
15: recess (first clearance portion)
16: first bracket fixing portion (mounting member fixing portion)
   16a: upper bracket fixing portion
   16b: lower bracket fixing portion
17: insertion hole
18: bead portion
20: seat cushion frame
21: cushion side frame (side frame)
22: front connection frame
23: rear connection frame
24: pan frame
   24a: duct insertion portion
25: pressure receiving member
26: second bracket fixing portion (mounting member fixing portion)
   26a: left bracket fixing portion
   26b: right bracket fixing portion
30: first blower (first functional component)
31: first mounting bracket (first mounting member)
   31a: upper end portion
   31b: lower end portion
   31c: storage recess
   31d: opening portion
32: first blower fixing portion (functional component fixing portion)
   32a: upper blower fixing portion
   32b: lower blower fixing portion
33: connector support portion
34: positioning portion
   34a: head portion
   34b: strut portion
38: first frame connection portion
   38a: upper connection portion (first connection portion)
   38b: lower connection portion (second connection portion)
39: bolt (fastening member)
40: first blowing port
49: connector
50: harness
51: grommet
51a: through-hole
52: bolt (fastening member)
   **52a:** head portion
   **52b:** top portion
53: holding member
   **53a:** bottom portion
   **53b:** side portion
   53c: step portion
54: recess (second clearance portion)
   54a: through-hole
56: holding member fixing portion
57: cover member
   57a: engaging portion
   57b: rib
   57c: through-hole
58: clip
60: connecting bracket
   60a: bottom portion
   60b: wall portion
   60c: flange
61: link
   61a: link body
   61b: flange
130: second blower (second functional component)
   130a: duct
131: second mounting bracket (second mounting member)
   131a: upper surface
   131b: rear end portion
   131c: lower surface
   131d: rib
132: second blower fixing portion (functional component fixing portion)
133: connector support portion
135: temporary fastening portion
136: guide portion
137: opening portion
138: second frame connection portion
   138a: left connection portion
   138b: right connection portion
139: bolt (fastening member)
140: second blowing port
151: grommet

## Claims

1. A conveyance seat, comprising:
a seat frame;
a functional component; and
a mounting member that is fixed to the functional component, and that mounts the functional component on the seat frame,
wherein the mounting member includes a plurality of temporary fastening portions that temporarily fasten the mounting member to the seat frame, and
the plurality of temporary fastening portions are disposed at positions where the functional component is interposed between the plurality of temporary fastening portions.

2. The conveyance seat according to claim 1,
wherein the plurality of temporary fastening portions are disposed on right and left sides of the functional component in a seat width direction.

3. The conveyance seat according to claim 1,
wherein the plurality of temporary fastening portions are disposed side by side in a seat front to rear direction or an up to down direction.

4. The conveyance seat according to claim 1,
wherein the mounting member is fixed to the seat frame by a plurality of fastening members, and
the plurality of fastening members are disposed at positions where at least one of the plurality of temporary fastening portions is interposed between the plurality of fastening members.

5. The conveyance seat according to claim 1,
wherein the mounting member is fixed to the seat frame by a plurality of fastening members, and
the plurality of temporary fastening portions are disposed at positions where at least one of the plurality of fastening members is interposed between the plurality of temporary fastening portions.

6. The conveyance seat according to claim 1,
wherein the mounting member includes a connector support portion that supports a connector that connects to the functional component, and
the connector support portion is provided at a position avoiding the plurality of temporary fastening portions.

7. The conveyance seat according to claim 1,
wherein an opening portion is formed in the mounting member, and
the plurality of temporary fastening portions are disposed at positions where the opening portion is interposed between the plurality of temporary fastening portions.

8. The conveyance seat according to claim 7,
wherein the plurality of temporary fastening portions interposing the opening portion between the plurality of temporary fastening portions are disposed on right and left sides of the opening portion in a seat width direction.

9. The conveyance seat according to claim 1,
wherein the mounting member is fixed to the seat frame by a plurality of fastening members, and
a grommet is provided between each of the plurality of fastening members and the mounting member.

10. The conveyance seat according to claim 9,
wherein the plurality of temporary fastening portions are disposed at positions avoiding the grommets.

11. The conveyance seat according to claim 1,
wherein an opening portion is formed in the mounting member, and
the mounting member includes a rib surrounding the opening portion on a lower surface of the mounting member.

12. The conveyance seat according to claim 1,
wherein the mounting member includes a guide portion that guides the plurality of temporary fastening portions, and
the guide portion is disposed in the vicinity of at least one of the plurality of temporary fastening portions.

13. The conveyance seat according to claim 12,
wherein the guide portion is disposed between two temporary fastening portions adjacent to each other among the plurality of temporary fastening portions.
